# EUROPEAN PATENT APPLICATION

(11) **EP 4 485 982 A1**
(43) Date of publication of application: **01.01.2025**
(21) Application number: 23773583.2
(22) Date of filing: 02.03.2023
(51) Int. Cl.: H04W 4/24

(54) **COMMUNICATION METHOD AND APPARATUS**

(30) Priority: 23.03.2022 CN 202210295175
(71) Applicant: Huawei Technologies Co., Ltd., Shenzhen, Guangdong 518129 (CN)
(72) Inventor: SUN, Haiyang, Shenzhen, Guangdong 518129 (CN)
(74) Representative: Gill Jennings & Every LLP
(86) International application number: PCT/CN2023/079373
(87) International publication number: WO 2023/179332

(57) **Abstract**

This application provides a communication method and apparatus, to provide a mechanism to support a policy control network element in determining, based on a status of a policy counter, a policy related to a terminal device. In the method, a first network element determines that a policy related to a terminal device is related to a spending limit of the terminal device; and the first network element may send an identifier of a first charging network element to a second network element. The first network element is a policy control network element, and the second network element is a mobility management network element; or the first network element is a mobility management network element, and the second network element is a policy control network element. In this way, the policy control network element and the mobility management network element may select a same charging network element, to support the policy control network element in determining, based on a status of the policy control network element, the policy related to the terminal device, and provide a mechanism that can support the policy control network element in determining, based on the status of the policy counter, the policy related to the terminal device.

## Description

### CROSS-REFERENCE TO RELATED APPLICATIONS

This application claims priority to Chinese Patent Application No. 202210295175.4, filed with the China National Intellectual Property Administration on March 23, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A 5th generation (5th generation, 5G) charging system includes a charging trigger function (charging trigger function, CTF) network element and a charging function (charging function, CHF) network element. The CTF network element generates charging data of a terminal device, and sends the charging data to the CHF network element. The CHF network element may maintain a status of a policy counter (policy counter status) of the terminal device based on the charging data and a spending limit (spending limit, SL) corresponding to the terminal device. The status of the policy counter indicates a label associated with a value of charging of the terminal device relative to the spending limit.

However, currently, there is no corresponding mechanism to support a PCF in determining, based on a status of a policy counter, a policy related to a terminal device.

### SUMMARY

Embodiments of this application provide a communication method and apparatus, to provide a mechanism to support a PCF in determining, based on a status of a policy counter, a policy related to a terminal device.

According to a first aspect, an embodiment of this application provides a communication method. The method may be performed by a first network element, or may be performed by a chip system. The chip system may implement a function of the first network element. The first network element may be a first policy control network element, a second mobility management network element, or the like. For ease of description, the following uses an example in which the first network element performs the method for description. The method includes: The first network element determines that a policy related to a terminal device is related to a spending limit of the terminal device; and the first network element sends first information to a second network element, where the first information includes an identifier of a first charging network element, the first charging network element is configured to provide a service (for example, a charging service or a control service of the spending limit) for the terminal device, the first network element is the first policy control network element, and the second network element is a first mobility management network element, or the first network element is the second mobility management network element, and the second network element is a second policy control network element. The first mobility management network element and the second mobility management network element may be a same mobility management network element, and the first policy control network element and the second policy control network element may be a same policy control network element.

In this embodiment of this application, when determining that the policy related to the terminal device is related to the spending limit of the terminal device, the first policy control network element determines the identifier of the first charging network element serving the terminal device, and may send the identifier of the first charging network element to the first mobility management network element; or the second mobility management network element determines the identifier of the first charging network element serving the terminal device, and may send the identifier of the first charging network element to the second policy control network element. In this way, both the mobility management network element and the policy control network element can determine the identifier of the first charging network element, so that the mobility management network element and the policy control network element may select the same first charging network element based on the identifier of the first charging network element. In this way, the mobility management network element may send charging input information to the first charging network element, where the charging input information indicates information required for charging the terminal device. The first charging network element may maintain a status of a policy counter of the terminal device based on the charging input information, so that the policy control network element may determine, based on the status of the policy counter, the policy related to the terminal device. This is equivalent to a case in which the policy control network element can indirectly determine, based on the charging input information sent by the mobility management network element, the policy related to the terminal device. The policy control network element can determine, based on more information, the policy related to the terminal device. This helps the policy control network element make a more accurate decision.

In a possible implementation, that the first network element determines that a policy related to a terminal device is related to a spending limit of the terminal device includes: The first network element receives second information from a third network element, where the second information indicates that the policy is related to the spending limit of the terminal device, the first network element is the first policy control network element or the second mobility management network element, and the third network element is a unified data management network element or a unified data repository network element.

In this implementation, the first network element may directly determine, based on an indication of the third network element, that the policy related to the terminal device is related to the spending limit, and a mechanism for determining that the policy related to the terminal device is related to the spending limit is provided. In addition, the first network element does not need to perform complex processing. This helps reduce a processing amount of the first network element.

In a possible implementation, that the first network element determines that a policy related to a terminal device is related to a spending limit of the terminal device includes: The first network element determines that a policy related to a slice to which the terminal device subscribes is related to the spending limit of the terminal device.

In this implementation, another mechanism for the first network element to determine that the policy related to the terminal device is related to the spending limit is provided. In addition, the first network element may determine, based on information about the slice to which the terminal device subscribes, that the policy related to the slice to which the terminal device subscribes is related to the spending limit of the terminal device, and the information about the slice to which the terminal device subscribes is easily obtained. Therefore, a process of determining that the policy related to the terminal device is related to the spending limit of the terminal device is simple.

In a possible implementation, the method further includes: If a policy control network element serving the terminal device is changed from the first network element to a third policy control network element, the first network element sends third information to a fourth network element, where the third information includes one or more of a subscription correlation identifier of the terminal device, a subscription permanent identifier of the terminal device, the identifier of the first charging network element, or status information of a policy counter, the policy counter is configured to track charging of the terminal device, a status of the policy counter is a label associated with a value of the policy counter relative to the spending limit, the first network element is the first policy control network element, and the fourth network element is the second network element or a unified data repository network element.

In this implementation, when the policy control network element serving the terminal device is changed, the policy control network element may send information related to the terminal device (for example, the one or more of the subscription correlation identifier, the subscription permanent identifier of the terminal device, the identifier of the first charging network element, or the status information of the policy counter) to the mobility management network element or the unified data repository network element, so that a changed policy control network element may obtain the information related to the terminal device from the mobility management network element or the unified data repository network element. This helps the changed policy control network element synchronize the information related to the terminal device in a timely manner.

In a possible implementation, the policy includes a user equipment policy and/or a mobility management policy of the terminal device.

In this implementation, a plurality of possibilities of the policy related to the terminal device are provided.

According to a second aspect, an embodiment of this application provides a communication method. The method may be performed by a second network element, or may be performed by a chip system. The chip system may implement a function of the second network element. The second network element may be a mobility management network element or a policy control network element. For ease of description, an example in which the second network element performs the method is used below. The method includes: The second network element receives first information from a first network element, where the first information includes an identifier of a first charging network element, the first charging network element is configured to provide a service for a terminal device, the first network element is a first policy control network element, and the second network element is a first mobility management network element, or the first network element is a third mobility management network element, and the second network element is a third policy control network element.

In a possible implementation, the first network element is the first policy control network element, the second network element is the first mobility management network element, and the method further includes: The second network element determines charging input information of the terminal device or a slice accessed by the terminal device, where the charging input information indicates information required for charging the terminal device; and the second network element sends the charging input information to the first charging network element.

In a possible implementation, the first network element is the first policy control network element, the second network element is the first mobility management network element, and the method further includes: The second network element receives third information from the first network element, where the third information includes one or more of a subscription correlation identifier of the terminal device, a subscription permanent identifier of the terminal device, the identifier of the first charging network element, or status information of a policy counter, the policy counter is configured to track charging of the terminal device, and a status of the policy counter is a label associated with a value of the policy counter relative to a spending limit; and the second network element sends the third information to the third mobility management network element or a unified data repository network element, where the third mobility management network element is a mobility management network element to which a mobility management network element serving the terminal device is changed from the first mobility management network element.

In a possible implementation, the first network element is a second mobility management network element, the second network element is a second policy control network element, and the method further includes: The second network element receives the third information from the first charging network element, where the third information includes the status of the policy counter, the policy counter is configured to track the charging of the terminal device, and the status of the policy counter is the label associated with the value of the policy counter relative to the spending limit; and/or
the second network element sends the third information to the first network element or the unified data repository network element, where the third information includes the status of the policy counter, the policy counter is configured to track the charging of the terminal device, and the status of the policy counter is the label associated with the value of the policy counter relative to the spending limit.

According to a third aspect, an embodiment of this application provides a communication method, including: A fifth network element sends third information to a sixth network element, where the third information includes status information of a policy counter, the policy counter is configured to track charging of a terminal device, a status of the policy counter is a label associated with a value of the policy counter relative to a spending limit, the fifth network element is a first policy control network element or a first charging network element, and the sixth network element is a unified data repository network element or a first mobility management network element.

In a possible implementation, the fifth network element is the first policy control network element, the sixth network element is the unified data repository network element or the first mobility management network element, and the method further includes: The fifth network element determines that a policy control network element serving the terminal device is changed from the first policy control network element to a third policy control network element.

In a possible implementation, the fifth network element is the first policy control network element, the sixth network element is the unified data repository network element or the first mobility management network element, and the method further includes: The fifth network element determines that a policy related to the terminal device is related to the spending limit of the terminal device.

In a possible implementation, that the fifth network element determines that a policy related to the terminal device is related to the spending limit of the terminal device includes: The fifth network element receives second information from a unified data management network element or the unified data repository network element, where the second information indicates that the policy related to the terminal device is related to the spending limit of the terminal device; or the fifth network element determines that a policy related to a slice to which the terminal device subscribes is related to the spending limit of the terminal device.

In a possible implementation, the fifth network element is the first charging network element, the sixth network element is the unified data repository network element, and the method further includes: The fifth network element determines that a charging network element serving the terminal device is changed from the first charging network element to a second charging network element.

In a possible implementation, the third information further includes one or more of a subscription correlation identifier of the terminal device, a subscription permanent identifier of the terminal device, or an identifier of the first charging network element.

In a possible implementation, the policy includes a user equipment policy and/or a mobility management policy of the terminal device.

According to a fourth aspect, an embodiment of this application provides a communication method, including: A seventh network element receives third information from a sixth network element, where the third information includes status information of a policy counter, the policy counter is configured to track charging of a terminal device, a status of the policy counter is a label associated with a value of the policy counter relative to a spending limit, the sixth network element is a unified data repository network element and the seventh network element is a third policy control network element or a second charging network element, or the sixth network element is a first mobility management network element and the seventh network element is a third mobility management network element, the third mobility management network element is a mobility management network element to which a mobility management network element serving the terminal device is changed from the first mobility management network element, the third policy control network element is a policy control network element to which a policy control network element serving the terminal device is changed from a first policy control network element, and the second charging network element is a charging network element to which a charging network element serving the terminal device is changed from a first charging network element.

In a possible implementation, the third information further includes one or more of a subscription correlation identifier of the terminal device, a subscription permanent identifier of the terminal device, or an identifier of the first charging network element.

In a possible implementation, the seventh network element is the third policy control network element, and the method further includes: The seventh network element sends a first request to the first charging network element, where the first request includes the subscription correlation identifier or the subscription permanent identifier corresponding to the terminal device; and a spending limit report is received from the first charging network element, where the spending limit report includes an updated status of the policy counter.

In a possible implementation, the seventh network element is the third mobility management network element, and the method further includes: The seventh network element stores the third information in a context of the terminal device.

According to a fifth aspect, an embodiment of this application provides a communication method, including: A first charging network element sends a first spending limit report to a first policy control network element, where the first spending limit report includes status information of a policy counter, the policy counter is configured to track charging of a terminal device, a status of the policy counter is a label associated with a value of the policy counter relative to a spending limit, and the first policy control network element is a policy control network element serving the terminal device; and if the first charging network element determines that the policy control network element serving the terminal device is changed from the first policy control network element to a third policy control network element, a second spending limit report of the terminal device is sent to the third policy control network element, where the second spending limit report includes updated status information of the policy counter.

In this embodiment of this application, if the first charging network element determines that the policy control network element serving the terminal device is changed from the first policy control network element to the third policy control network element, the first charging network element may directly continue to send, to the third policy control network element, latest status information of the policy counter corresponding to the terminal device, and does not need to send, to the third policy control network element, previous latest status information of the policy counter corresponding to the terminal device, so that a quantity of interactions between the first charging network element and the third policy control network element is reduced, and transmission overheads are reduced.

In a possible implementation, the method further includes: The first charging network element receives a first request from the third policy control network element, where the first request is for requesting to obtain the second spending limit report, and the first request includes a subscription correlation identifier or a subscription permanent identifier corresponding to the terminal device.

According to a sixth aspect, an embodiment of this application provides a communication apparatus. The communication apparatus may be the first network element in the first aspect, an electronic device (for example, the chip system) configured in the first network element, or a large device including the first network element. The communication apparatus includes a corresponding means (means) or module configured to perform the first aspect or any optional implementation. For example, the communication apparatus includes a transceiver module (also referred to as a transceiver unit sometimes) and a processing module (also referred to as a processing unit sometimes).

For example, the processing module is configured to determine that a policy related to a terminal device is related to a spending limit of the terminal device; and the transceiver module is configured to send first information to a second network element, where the first information includes an identifier of a first charging network element, the first charging network element is configured to provide a service for the terminal device, the first network element is a first policy control network element, and the second network element is a first mobility management network element, or the first network element is a second mobility management network element, and the second network element is a second policy control network element.

According to a seventh aspect, an embodiment of this application provides a communication apparatus. The communication apparatus may be the second network element in the second aspect, an electronic device (for example, the chip system) configured in the second network element, or a large device including the second network element. The communication apparatus includes a corresponding means (means) or module configured to perform the second aspect or any optional implementation. For example, the communication apparatus includes a transceiver module (also referred to as a transceiver unit sometimes). Optionally, the communication apparatus further includes a processing module (also referred to as a processing unit sometimes).

For example, the transceiver module is configured to receive first information from a first network element, where the first information includes an identifier of a first charging network element, the first charging network element is configured to provide a service for a terminal device, the first network element is a first policy control network element, and the second network element is a first mobility management network element, or the first network element is a third mobility management network element, and the second network element is a third policy control network element.

According to an eighth aspect, an embodiment of this application provides a communication apparatus. The communication apparatus may be the first network element in the third aspect, an electronic device (for example, a chip system) configured in the fifth network element, or a large device including the fifth network element. The communication apparatus includes a corresponding means (means) or module configured to perform the third aspect or any optional implementation. For example, the communication apparatus includes a transceiver module (also referred to as a transceiver unit sometimes). Optionally, the communication apparatus further includes a processing module (also referred to as a processing unit sometimes).

For example, the transceiver module is configured to send third information to a sixth network element, where the third information includes status information of a policy counter, the policy counter is configured to track charging of a terminal device, a status of the policy counter is a label associated with a value of the policy counter relative to a spending limit, the fifth network element is a first policy control network element or a first charging network element, and the sixth network element is a unified data repository network element or a first mobility management network element.

According to a ninth aspect, an embodiment of this application provides a communication apparatus. The communication apparatus may be a first network element in the fourth aspect, an electronic device (for example, a chip system) configured in the seventh network element, or a large device including the seventh network element. The communication apparatus includes a corresponding means (means) or module configured to perform the fourth aspect or any optional implementation. For example, the communication apparatus includes a transceiver module (also referred to as a transceiver unit sometimes). Optionally, the communication apparatus further includes a processing module (also referred to as a processing unit sometimes).

For example, the transceiver module is configured to receive third information from a sixth network element, where the third information includes status information of a policy counter, the policy counter is configured to track charging of a terminal device, a status of the policy counter is a label associated with a value of the policy counter relative to a spending limit, the sixth network element is a unified data repository network element and the seventh network element is a third policy control network element or a second charging network element, or the sixth network element is a first mobility management network element and the seventh network element is a third mobility management network element, the third mobility management network element is a mobility management network element to which a mobility management network element serving the terminal device is changed from the first mobility management network element, the third policy control network element is a policy control network element to which a policy control network element serving the terminal device is changed from a first policy control network element, and the second charging network element is a charging network element to which a charging network element serving the terminal device is changed from a first charging network element.

According to a tenth aspect, an embodiment of this application provides a communication apparatus. The communication apparatus may be a first network element in the fifth aspect, an electronic device (for example, a chip system) configured in the first charging network element, or a large device including the first charging network element. The communication apparatus includes a corresponding means (means) or module configured to perform the fifth aspect or any optional implementation. For example, the communication apparatus includes a transceiver module (also referred to as a transceiver unit sometimes). Optionally, the communication apparatus further includes a processing module (also referred to as a processing unit sometimes).

For example, the transceiver module is configured to send a first spending limit report to a first policy control network element, where the first spending limit report includes status information of a policy counter, the policy counter is configured to track charging of a terminal device, a status of the policy counter is a label associated with a value of the policy counter relative to a spending limit, and the first policy control network element is a policy control network element serving the terminal device; and if the first charging network element determines that the policy control network element serving the terminal device is changed from the first policy control network element to a third policy control network element, a second spending limit report of the terminal device is sent to the third policy control network element, where the second spending limit report includes updated status information of the policy counter.

According to an eleventh aspect, an embodiment of this application provides a communication system. The communication system includes the apparatus in the sixth aspect and the apparatus in the seventh aspect.

Optionally, the communication system further includes the communication apparatus in the tenth aspect.

According to a twelfth aspect, an embodiment of this application provides a communication system. The communication system includes the apparatus in the eighth aspect and the apparatus in the ninth aspect.

Optionally, the communication system further includes the communication apparatus in the tenth aspect.

According to a thirteenth aspect, an embodiment of this application provides a communication apparatus, including a processor and a memory. The memory is configured to store one or more computer programs, the one or more computer programs include computer-executable instructions, and when the communication apparatus runs, the processor executes the one or more computer programs stored in the memory, to enable the communication apparatus to perform the method according to any one of the first aspect to the fifth aspect.

Optionally, the communication apparatus further includes other components, for example, an antenna, an input/output module, and an interface. Such components may be hardware, software, or a combination of software and hardware.

According to a fourteenth aspect, an embodiment of this application provides a chip system. The chip system includes a processor and an interface. The processor is configured to invoke instructions from the interface and run the instructions, and when the processor executes the instructions, the method according to any one of the first aspect to the fifth aspect is implemented.

According to a fifteenth aspect, an embodiment of this application provides a computer-readable storage medium. The computer-readable storage medium is configured to store a computer program or instructions, and when the computer program or the instructions are run, the method according to any one of the first aspect to the fifth aspect is implemented.

According to a sixteenth aspect, an embodiment of this application provides a computer program product including instructions, and when the instructions are run on a computer, the method according to any one of the first aspect to the fifth aspect is implemented.

For beneficial effects of the second aspect to the sixteenth aspect, refer to the beneficial effects described in the first aspect. Details are not listed herein.

### BRIEF DESCRIPTION OF DRAWINGS

FIG. 1A, FIG. 1B, FIG. 2A, FIG. 2B, FIG. 3A, FIG. 3B, and FIG. 4 are diagrams of several network architectures to which embodiments of this application are applicable;
FIG. 5 and FIG. 6 are schematic flowcharts of several communication methods according to embodiments of this application;
FIG. 7 is a diagram of a status of a policy counter according to an embodiment of this application;
FIG. 8 to FIG. 12 are schematic flowcharts of several communication methods according to embodiments of this application; and
FIG. 13 to FIG. 22 are diagrams of structures of several communication apparatuses according to embodiments of this application.

### DESCRIPTION OF EMBODIMENTS

To make objectives, technical solution, and advantages of embodiments of this application clearer, the following further describes embodiments of this application in detail with reference to the accompanying drawings.
1. A terminal device in embodiments of this application is a device having a wireless transceiver function, and may be a fixed device, a mobile device, a handheld device, a wearable device, a vehicle-mounted device, or a wireless apparatus (for example, a communication module or a chip system) built in the foregoing device. The terminal device is configured to connect a person, an object, a machine, and the like, and may be widely used in various scenarios, for example, including but not limited to terminal devices in the following scenarios: cellular communication, device-to-device (device-to-device, D2D) communication, vehicle to everything (vehicle to everything, V2X), machine-to-machine/machine type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), remote medical (remote medical), a smart grid (smart grid), smart furniture, a smart office, a smart wearable, smart transportation, a smart city (smart city), an uncrewed aerial vehicle, a robot, and the like. The terminal device may be sometimes referred to as user equipment (user equipment, UE), a terminal, an access station, a UE station, a remote station, a wireless communication device, a user apparatus, or the like.
   A network device in embodiments of this application includes, for example, an access network element (or referred to as an access network device) and/or a core network element (or referred to as a core network device).
2. An access network element in embodiments of this application is a device having a wireless transceiver function, and is configured to communicate with the terminal device. The access network element includes but is not limited to a base station (BTS, NodeB, eNodeB/eNB, or gNodeB/gNB) in a communication system, a transceiver point (t(R)ANsmission reception point, TRP), a base station evolved in a subsequent 3GPP, an access node in a wireless fidelity (wireless fidelity, Wi-Fi) system, a wireless relay node, a wireless backhaul node, and the like. The base station may be a macro base station, a micro base station, a pico base station, a small cell, a relay station, or the like. A plurality of base stations may support networks of a same access technology mentioned above, or may support networks of different access technologies mentioned above. The base station may include one or more co-site or non-co-site transmission reception points. The network device may also be a radio controller or a central unit (central unit, CU) in a cloud radio access network (cloud radio access network, C(R)AN) scenario, or may be referred to as an aggregation unit, and/or a distribution unit (distributed unit, DU). Alternatively, the network device may be a server, a wearable device, a vehicle-mounted device, or the like. For example, a network device in a vehicle to everything V2X technology may be a road side unit (road side unit, RSU). The following uses an example in which the access network device is the base station for description. A plurality of network devices in the communication system may be base stations of a same type, or may be base stations of different types. The base station may communicate with the terminal device, or may communicate with the terminal device through a relay station. The terminal device may communicate with a plurality of base stations in different access technologies.

The core network element is configured to implement at least one of functions such as mobility management, data processing, session management, and policy and charging. Names of devices that implement the core network functions in systems of different access technologies may be different. This is not limited in embodiments of this application. Using a 5G system as an example, the core network element includes an access and mobility management function (access and mobility management function, AMF), a session management function (session management function, SMF), a PCF, a user plane function (user plane function, UPF), and the like.

In embodiments of this application, an apparatus configured to implement a function of the network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is the network device is for describing the technical solutions provided in embodiments of this application.

3. A network element in embodiments of this application may be a single device, or may be an apparatus integrating a plurality of devices. The network element shown in embodiments of this application may alternatively be a logical concept, for example, a software module, or a network function corresponding to a service provided by each network element. The network function may be understood as a virtualized function in virtualization implementation, or may be understood as a network function that provides a service in a service-oriented network. For example, the network function is mainly responsible for a session management SMF dedicated to session management in a 5G core network. This is not specifically limited in embodiments of this application.

4. A network slice (network slice) in embodiments of this application may also be referred to as a slice for short, and is a plurality of end-to-end networks virtualized on a basis of general-purpose hardware by using a slicing technology. In other words, the slice may be understood as a logical network that has a specific network feature and that is obtained by dividing a communication network of a carrier. One network slice may provide a service for one or more service types, for example, enhanced mobile broadband (enhanced mobile broadband, eMBB) and massive machine type of communication (massive machine type of communication, mMTC). Network slices may also be classified into a plurality of types, for example, an eMBB type, an mMTC type, and fixed radio access (fixed wireless access, FWA).

5. A UE policy in embodiments of this application may also be referred to as a user policy for short, and is a policy provided by the PCF for the UE through the AMF. The UE policy includes one or more of the following (1) to (4).
(1) Access network discovery & selection policy (access network discovery & selection policy, ANDSP): The ANDSP is used by the UE to select non-3rd generation partnership project (3rd generation partnership project, 3GPP) access and select a non-3GPP interworking function in a public land mobile network (public land mobile network, PLMN).
(2) UE route selection policy (UE Route Selection Policy, URSP): The policy is used by the UE to determine whether a detected application can be associated with an established session, whether the detected application can be offloaded to non-3GPP access outside the session, and whether the detected application can be routed through proximity-based services (proximity-based services, ProSe) layer 3 UE-to-network relay outside the session; and the policy can be used by the UE to trigger establishment of a new session, where for example, the session is a protocol data unit (protocol data unit, PDU).
(3) Vehicle to everything policy (vehicle to everything policy, V2XP): The policy provides a configuration parameter for the UE, and is used for V2X communication through a PC5 reference point, a Uu reference point, or both.
(4) Proximity-based services policy (proximity-based services policy, ProSe Policy ProSeP): The policy provides, for the UE, configuration parameters of ProSe direct discovery, ProSe direct communication, ProSe UE-to-network relay, and ProSe UE-to-remote UE.

6. A mobility management policy (access and mobility related policy, AM policy) in embodiments of this application may also be referred to as an access and mobility policy, or an access and mobility related policy, including policies such as service area restriction management, RFSP index management, aggregate maximum bit rate (aggregate maximum bit rate, AMBR) management of the terminal device, maximum bit rate (user equipment slice maximum bit rate, UE-Slice-MBR) management of a slice accessed by the terminal device, and SMF selection management. The AMBR management of the terminal device is, for example, to increase or decrease an AMBR of the UE. The LTE-Slice-MBR management is, for example, to increase or decrease a UE-Slice-MBR.

7. A spending limit in embodiments of this application may also be referred to as a spending restriction, a consumption restriction, a consumption limit, or the like. The spending limit is a limit of an object that is allowed to be used by the terminal device, or it may be understood that the spending limit is for limiting spending of the terminal device for an object, where the object is, for example, one or more of a currency, traffic, or duration. It should be noted that the terminal device may include one or more spending limits, and one spending limit may correspond to one or more thresholds.

8. A policy counter is a mechanism (A mechanism within the CHF to track spending applicable to a subscriber) for tracking spending of the terminal device in a charging function network element.

9. A status of the policy counter is a label associated with a value of the policy counter relative to the spending limit, and may be understood as a degree of proximity between actual spending and the spending limit of the terminal device. In other words, the status of the policy counter is for describing a status around the spending limit. The label is jointly configured in the CHF and the PCF. A quantity of possible statuses of the policy counter is greater than a quantity of spending limits associated with the policy counter. The status of the policy counter may be for transferring spending of the UE from the CHF to the PCF. Optionally, the policy counter related to the terminal device includes a policy counter that is in use and that corresponds to the terminal device. Correspondingly, the status of the policy counter includes a status of the policy counter in use. It should be noted that the status of the policy counter includes a current status of the policy counter, and may further include a status that the policy counter is about to reach. Optionally, the policy counter related to the terminal device further includes a to-be-used policy counter corresponding to the terminal device. Correspondingly, the status of the policy counter further includes activation time of the to-be-used policy counter corresponding to the terminal device.

In embodiments of this application, unless otherwise specified, a quantity of nouns indicates "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists. A and B each may be singular or plural. The character "/" generally indicates an "or" relationship between the associated objects. For example, A/B indicates A or B. "At least one of the following items (pieces)" or a similar expression thereof indicates any combination of these items, including a single item (piece) or any combination of a plurality of items (pieces). For example, at least one of a, b, or c indicates a, b, c, a and b, a and c, b and c, or a, b, and c, where a, b, and c may be singular or plural.

Unless otherwise specified, ordinal numbers such as "first" and "second" in embodiments of this application are used to distinguish between a plurality of obj ects, and are not intended to limit a sequence, a time sequence, priorities, or importance of the plurality of objects. For example, "first information" and "second information" in embodiments of this application may be for representing two pieces of information, but content, sizes, priorities, importance, or the like of the two pieces of information is not limited.

An architecture of a 5G communication system includes two parts: an access network and a core network. The access network is for implementing a function related to radio access, and the access network includes a 3rd generation partnership project (3rd generation partnership project, 3GPP) access network and a non (non) -3GPP access network. The core network is connected to the access network, and is for implementing a function related to user control management.

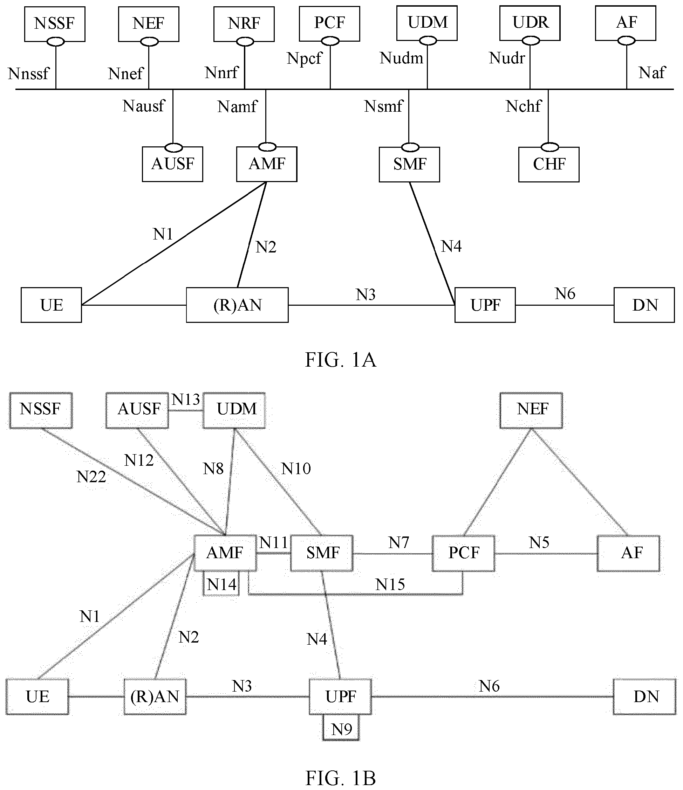

FIG. 1A is a diagram of a network architecture to which an embodiment of this application is applicable. The network architecture is, for example, a service-oriented architecture of a 5G network, and the network architecture is a non-roaming network architecture. The 5G network includes a (R)AN, a UPF, an AMF, an SMF, an authentication server function (authentication server function, AUSF), a network slice selection function (network slice selection function, NSSF), a network exposure function (network exposure function, NEF), a network repository function (network repository function, NRF), a PCF, a unified data management (unified data management, UDM), a unified data repository (unified data repository, UDR), an application function (application function, AF), a charging function (charging function, CHF), and the like. It should be noted that FIG. 1A merely provides some examples of network elements or entities in the 5G network. The 5G network may further include some network elements or entities that are not shown in FIG. 1A, such as a network data analytics function (network data analytics function, NWDAF). This is not limited in this embodiment of this application.

As shown in FIG. 1A, UE accesses the 5G network through the (R)AN, and the UE communicates with the AMF through an N1 interface (N1 for short); the (R)AN communicates with the AMF through an N2 interface (N2 for short); the (R)AN communicates with the UPF through an N3 interface (N3 for short); the SMF communicates with the UPF through an N4 interface (N4 for short); and the UPF accesses a data network (data network, DN) through an N6 interface (N6 for short). In addition, control plane functions such as the AUSF, the AMF, the SMF, the NSSF, the NEF, the NRF, the PCF, the UDM, the UDR, the CHF, and the AF shown in FIG. 1A interact with each other through service-oriented interfaces. For example, a service-oriented interface provided by the AUSF externally is Nausf, a service-oriented interface provided by the AMF externally is Namf, a service-oriented interface provided by the SMF externally is Nsmf, a service-oriented interface provided by the NSSF externally is Nnssf, a service-oriented interface provided by the NEF externally is Nnef, a service-oriented interface provided by the NRF externally is Nnrf, a service-oriented interface provided by the PCF externally is Npcf, a service-oriented interface provided by the UDM externally is Nudm, a service-oriented interface provided by the UDR externally is Nudr, a service-oriented interface provided by the CHF externally is Nchf, and a service-oriented interface provided by the AF externally is Naf. For related function descriptions and interface descriptions, refer to a diagram of a 5G system architecture (5G system architecture) in the 23501 standard. Details are not described herein.

FIG. 1B is a diagram of another network architecture to which an embodiment of this application is applied. The network architecture is a non-roaming network architecture. In the network architecture, network elements such as an NSSF, an AUSF, a UDM, UE, a (R)AN, a PCF, and an SMF can communicate with an AMF. The AUSF can further communicate with the UDM, and the UDM can further communicate with the SMF. In addition to communicating with the AMF and the UDM, the SMF can further communicate with a UPF and the PCF. The PCF can further communicate with an AF and an NEF. The NEF can further communicate with the AF. The UPF can communicate with the (R)AN and a DN. In FIG. 1B, "Nxx" between two network elements indicates an interface between the two network elements. For example, N22 indicates an interface between the NSSF and the AMF, N12 indicates an interface between the AUSF and the AMF, and N8 indicates an interface between the UDM and the AMF.

It should be noted that, in a non-roaming scenario shown in FIG. 1A or FIG. 1B, it is equivalent to a case in which the UE is in a home public land mobile network (home public land mobile network, HPLMN), and the PCF is equivalent to a PCF in the HPLMN, and therefore may be referred to as an H-PCF, an h-PCF, an hPCF, or an HPCF; the AMF is equivalent to an AMF in the HPLMN, and therefore may be referred to as an H-AMF, an h-AMF, an hAMF, or an HAMF; and the CHF is equivalent to a CHF in the HPLMN, and therefore may be referred to as an H-CHF, an h-CHF, an hCHF, or an HCHF.

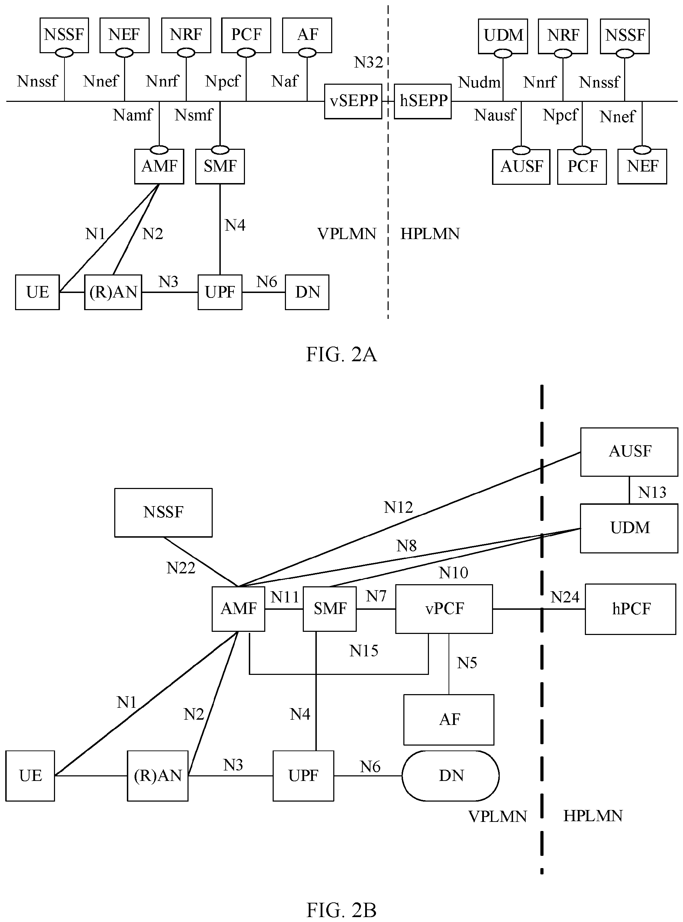

FIG. 2A is a diagram of still another network architecture to which an embodiment of this application is applied. The network architecture is, for example, a service-oriented architecture of a 5G network. In addition, the network architecture is a roaming network architecture, for example, a local breakout (local breakout, LBO) roaming scenario. The 5G network includes an HPLMN and a visited public land mobile network (visited public land mobile network, VPLMN). The HPLMN is a home network of UE, and the VPLMN is a roaming area network of the UE. In this scenario, a service needs to be offloaded in the VPLMN. That is, a DN is in the VPLMN. The VPLMN and the HPLMN communicate with each other by using a visited security edge protection proxy (visited security edge protection proxy, vSEPP) and a home security edge protection proxy (home security edge protection proxy, hSEPP).

As shown in FIG. 2A, in the VPLMN, UE accesses the 5G network through a (R)AN, and the UE communicates with an AMF through an N1 interface (N1 for short); the (R)AN network element communicates with the AMF through an N2 interface (N2 for short); the (R)AN network element communicates with a UPF through an N3 interface (N3 for short); and an SMF communicates with the UPF through an N4 interface (N4 for short), and the UPF accesses the DN through an N6 interface (N6 for short). In addition, control plane functions such as an NSSF, an NEF, the AMF, the SMF, an NRF, a PCF, or an AF in the VPLMN shown in FIG. 2A interact with each other through service-oriented interfaces. For example, a service-oriented interface provided by the AMF externally is Namf, a service-oriented interface provided by the SMF externally is Nsmf, a service-oriented interface provided by the NSSF externally is Nnssf, a service-oriented interface provided by the NEF externally is Nnef, a service-oriented interface provided by the NRF externally is Nnrf, a service-oriented interface provided by the PCF externally is Npcf, and a service-oriented interface provided by the AF externally is Naf. Control plane functions such as a UDM, an AUSF, a PCF, an NRF, an NSSF, or an NEF in the HPLMN shown in FIG. 2A also interact with each other through service-oriented interfaces. For example, a service-oriented interface provided by the AUSF externally is Nausf; and a service-oriented interface provided by the UDM externally is Nudm. An AMF may communicate with an H-PCF and a V-PCF. In addition, the HPLMN may further include an H-CHF (not shown in FIG. 2A). Similarly, the VPLMN may further include a CHF (not shown in FIG. 2A), and the CHF in the VPLMN may also be referred to as a V-CHF, a v-CHF, an hCHF, or a VCHF. The H-PCF may communicate with the H-CHF, and the V-PCF may communicate with the V-CHF.

In addition, FIG. 2B is a diagram of still another network architecture to which an embodiment of this application is applied. The network architecture is a roaming network architecture, for example, an LBO roaming scenario. A 5G network includes an HPLMN and a VPLMN. In the network architecture, an NSSF, UE, a (R)AN, and an SMF in the VPLMN, and an AUSF and a UDM in the HPLMN can communicate with an AMF in the VPLMN. The SMF in the VPLMN can further communicate with a UPF and a PCF (also referred to as a vPCF or an HPCF) in the VPLMN and the UDM in the HPLMN. The PCF in the VPLMN can further communicate with an AF in the VPLMN and a PCF (also referred to as an hPCF or a VPCF) in the HPLMN. The UPF in the VPLMN can further communicate with the (R)AN and a DN in the VPLMN. In FIG. 2B, "Nxx" between two network elements indicates an interface between the two network elements. The HPLMN includes the H-PCF. The VPLMN includes the V-PCF. The AMF may communicate with the V-PCF and the H-PCF. In addition, the HPLMN may further include an H-CHF (not shown in FIG. 2B). Similarly, the VPLMN may further include an H-CHF (not shown in FIG. 2B). The H-PCF may communicate with the H-CHF, and the V-PCF may communicate with the V-CHF.

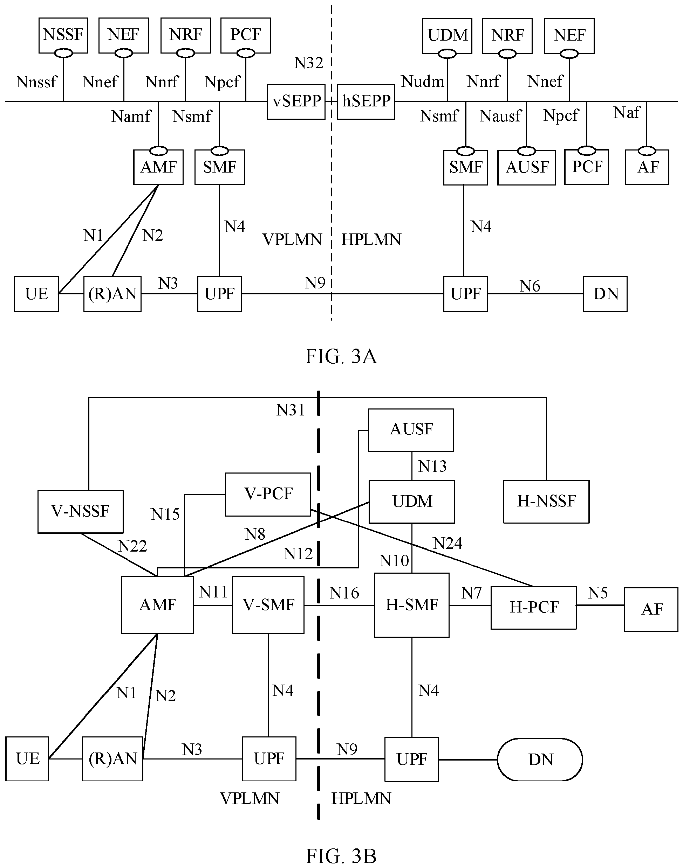

FIG. 3A is a diagram of still another network architecture to which an embodiment of this application is applied. The network architecture is, for example, a service-oriented architecture of a 5G network. The network architecture is a roaming network architecture, for example, a home routed (home routed, HR) roaming scenario. The 5G network includes an HPLMN and a VPLMN. The HPLMN is a home network of UE, the VPLMN is a roaming area network of the UE, and the VPLMN and the HPLMN communicate with each other by using a vSEPP and a hSEPP. Different from the network architecture shown in FIG. 2A, in a scenario shown in FIG. 3A, a service needs to be offloaded in the HPLMN. That is, a DN is in the HPLMN.

As shown in FIG. 3A, in the VPLMN, the UE accesses the 5G network through a (R)AN network element, and the UE communicates with an AMF through an N1 interface (N1 for short); the (R)AN network element communicates with the AMF through an N2 interface (N2 for short); the (R)AN network element communicates with a UPF through an N3 interface (N3 for short); and an SMF communicates with the UPF through an N4 interface (N4 for short). In the HPLMN, a UPF accesses the DN through an N6 interface (N6 for short); and the UPF communicates with an SMF through an N4 interface (N4 for short). In addition, the UPF in the VPLMN communicates with the UPF in the HPLMN through an N9 interface (N2 for short). In addition, control plane functions such as an NSSF, an NEF, the AMF, the SMF, an NRF, or a PCF in the VPLMN shown in FIG. 3A interact with each other through service-oriented interfaces. For example, a service-oriented interface provided by the AMF externally is Namf, a service-oriented interface provided by the SMF externally is Nsmf, a service-oriented interface provided by the NSSF externally is Nnssf, a service-oriented interface provided by the NEF externally is Nnef, a service-oriented interface provided by the NRF externally is Nnrf, and a service-oriented interface provided by the PCF externally is Npcf. Control plane functions such as a UDM, an AUSF, a PCF, an NRF, an NSSF, an AF, or an NEF in the HPLMN shown in FIG. 3 A also interact with each other through service-oriented interfaces. For example, a service-oriented interface provided by the AUSF externally is Nausf, a service-oriented interface provided by the UDM externally is Nudm, and a service-oriented interface provided by the AF externally is Naf. The HPLMN includes an H-PCF. The VPLMN includes a V-PCF. The AMF may communicate with the V-PCF and the H-PCF. In addition, the HPLMN may further include an H-CHF (not shown in FIG. 3A). The VPLMN may further include an H-CHF (not shown in FIG. 3A). The H-PCF may communicate with the H-CHF, and the V-PCF may communicate with the V-CHF.

In addition, FIG. 3B is a diagram of still another network architecture to which an embodiment of this application is applied. The network architecture is a roaming network architecture, for example, an HR roaming scenario. A 5G network includes an HPLMN and a VPLMN. In the network architecture, an NSSF, UE, a (R)AN, an SMF, and a PCF in the VPLMN, and an AUSF and a UDM in the HPLMN can communicate with an AMF in the VPLMN. The SMF in the VPLMN can further communicate with a UPF in the VPLMN and an SMF in the HPLMN. A V-PCF can further communicate with an H-PCF. The UPF in the VPLMN can further communicate with the (R)AN in the VPLMN and a UPF in the HPLMN. The NSSF in the VPLMN can further communicate with an NSSF in the HPLMN. The SMF in the HPLMN can further communicate with the UPF, the UDM, and the PCF in the HPLMN. The UDM in the HPLMN can further communicate with the AUSF in the HPLMN. The H-PCF can further communicate with an AF in the HPLMN. The UPF in the HPLMN can further access a DN in the VPLMN. In FIG. 3B, "Nxx" between two network elements indicates an interface between the two network elements. The AMF may communicate with the V-PCF and the H-PCF. In addition, the HPLMN may further include an H-CHF (not shown in FIG. 3B). Similarly, the VPLMN may further include an H-CHF (not shown in FIG. 3B). The H-PCF may communicate with the H-CHF, and the V-PCF may communicate with the V-CHF.

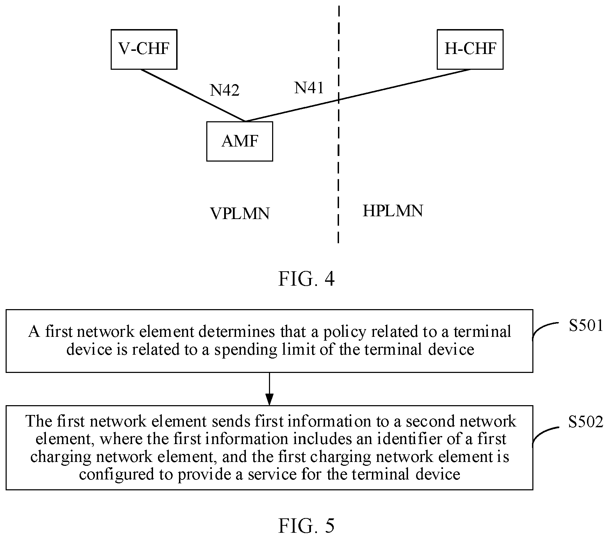

FIG. 4 is a diagram of still another network architecture to which an embodiment of this application is applied. The network architecture is, for example, a roaming network architecture, for example, an HR roaming scenario or an LBO roaming scenario. A 5G network includes a home public land mobile network (home public land mobile network, HPLMN) and a visited public land mobile network (visited public land mobile network, VPLMN). The HPLMN is a home network of UE, and the VPLMN is a roaming area network of the UE.

In this scenario, an AMF may communicate with a V-CHF in the VPLMN, or may communicate with an H-CHF. An H-PCF may communicate with the H-CHF, and a V-PCF may communicate with the V-CHF.

The following describes functions of some network elements in FIG. 1A, FIG. 1B, FIG. 2A, FIG. 2B, FIG. 3A, FIG. 3B, or FIG. 4.

The AMF network element is referred to as the AMF for short, and is mainly responsible for mobility management in a mobile network, such as user location update, user network registration, and user handover.

The SMF network element is referred to as the SMF for short, and is mainly responsible for session management in the mobile network, such as session establishment, modification, and release. A specific function is, for example, allocating an internet protocol (internet protocol, IP) address to a user, or selecting a UPF that provides a packet forwarding function.

The UPF network element is referred to as the UPF for short, and is responsible for forwarding and receiving user data in the UE. The UPF network element may receive the user data from a data network, and transmit the user data to the UE by using an access network device. Alternatively, the UPF network element may receive the user data from the UE by using an access network device, and forward the user data to a data network. A transmission resource and a scheduling function that are used by the UPF to provide a service for the UE are managed and controlled by the SMF.

The PCF network element is referred to as the PCF for short, mainly supports providing a unified policy framework to control network behavior, and providing a policy rule to a control layer network function, and is responsible for obtaining user subscription information related to policy decision.

The UDM network element is referred to as the UDM for short, and is configured to generate an authentication credential, process a subscriber identifier (for example, store and manage a subscription permanent identifier), control access authorization, manage subscription data, and the like.

The DN is a serving network that provides a data transmission service for the user, such as an IP multimedia service (IP multimedia service, IMS) or the Internet (Internet). The UE may access the DN by using a session established between the UE and the DN. Optionally, an example in which the session in this embodiment of this application is a protocol data unit (protocol data unit, PDU) session is used.

It should be noted that, in the roaming scenario (for example, the HR roaming scenario or the LBO roaming scenario, to be specific, the roaming scenario shown in any one of FIG. 2A, FIG. 2B, FIG. 3A, FIG. 3B, and FIG. 4), a PLMN serving the UE may be changed from the VPLMN to the HPLMN, may be changed from the HPLMN to the VPLMN, or may be changed from a VPLMN to another VPLMN.

It should be noted that the policy control network element, the session management network element, the charging network element, the unified data management network element, the unified data repository network element, and the like in embodiments of this application are merely names, and the names constitute no limitation on the devices. Using a 5G system as an example, the policy control network element is, for example, the PCF, the session management network element is, for example, the SMF, a user plane network element is, for example, the UPF, the unified data repository network element is, for example, the UDR, the unified data management network element is, for example, the UDM, and the charging network element or charging function network element is the CHF. In a non-5G system, for example, in another future communication system, a policy control network element, a session management network element, a charging network element, a unified data management network element, and a unified data repository network element may alternatively correspond to other network elements. This is not specifically limited in embodiments of this application.

It should be noted that, in the network architecture shown in FIG. 1A, FIG. 1B, FIG. 2A, FIG. 2B, FIG. 3A, FIG. 3B, or FIG. 4, the PCF and the UDR may communicate with each other, and the AMF and the UDM may communicate with each other. With continuous evolution of communication technologies, in a possible implementation, the PCF and the UDM may further communicate with each other, and the AMF and the UDR may further communicate with each other. This is not limited in embodiments of this application.

The technical solutions provided in embodiments of this application may be applied to the 5G system, for example, applied to the network architecture shown in any one of FIG. 1A, FIG. 1B, FIG. 2A, FIG. 2B, FIG. 3A, FIG. 3B, or FIG. 4. Alternatively, the technical solutions provided in embodiments of this application may be applied to a next-generation mobile communication system or another similar communication system. This is not limited in embodiments of this application.

The following describes a method provided in embodiments of this application with reference to the accompanying drawings. In the accompanying drawings corresponding to embodiments of this application, steps represented by using dashed lines are optional steps. In addition, in a process of describing embodiments of this application, an example in which the technical solutions in embodiments of this application are applied to the 5G system is used. Therefore, each network element is described by using a corresponding network element in the 5G system. For example, the PCF in embodiments of this application may be replaced with a policy control function network element or a policy control network element. For another example, the AMF in embodiments of this application may be replaced with a mobility management network element or an access and mobility management network element. For another example, the UDR in embodiments of this application may be replaced with a unified data repository network element. For another example, the UDM in embodiments of this application may be replaced with a unified data management network element. For another example, the CHF in embodiments of this application may be replaced with a charging function network element or a charging network element. If the technical solutions provided in embodiments of this application are applied to another communication system, a name and/or a function of the network element may be changed. This is not limited herein.

To provide a mechanism to support a PCF in determining, based on a status of a policy counter, a policy related to a terminal device, an embodiment of this application provides a communication method. In the communication method, a mobility management network element may send an identifier of a first charging network element to a policy control network element, or a policy control network element may send an identifier of a first charging network element to a mobility management network element, so that both the policy control network element and the mobility management network element may determine the identifier of the first charging network element, and may select a same charging network element based on the identifier of the first charging network element. This ensures that the policy control network element may indirectly determine, based on charging input information reported by the mobility management network element, a policy related to a terminal device, to provide a mechanism, so that the policy control network element may determine, based on a status of a policy counter, the policy related to the terminal device.

FIG. 5 is a schematic flowchart of a communication method according to an embodiment of this application. It should be noted that the communication method shown in FIG. 5 is applicable to the diagram of the application scenario shown in FIG. 1A, FIG. 1B, FIG. 2A, FIG. 2B, FIG. 3A, FIG. 3B, or FIG. 4. In the embodiment shown in FIG. 5, an example in which a control policy network element is a PCF, a mobility management network element is an AMF, a unified data repository network element is a UDR, a unified data management network element is a UDM, and a charging network element is a CHF is used for description.

S501: A first network element determines that a policy related to a terminal device is related to a spending limit of the terminal device.

Optionally, the first network element may be a first AMF or a second PCF. The policy related to the terminal device may directly or indirectly affect service execution of the terminal device, and may include a UE policy and/or a mobility management policy corresponding to the terminal device. For meanings of the UE policy and the mobility management policy, refer to the foregoing descriptions.

That the policy related to the terminal device is related to the spending limit of the terminal device may be understood as that the spending limit of the terminal device may be considered when the policy related to the terminal device is determined, or may be understood as that the spending limit of the terminal device affects a manner of determining the policy related to the terminal device. The manner of determining the policy related to the terminal device includes determining the policy related to the terminal device and/or a process of determining the policy related to the terminal device. The first network element may perform step S501 in a plurality of manners, and the following uses examples for description.

Manner 1: The first network element determines, based on second information from a third network element, that the policy related to the terminal device is related to the spending limit of the terminal device. The second information indicates that the policy is related to the spending limit of the terminal device. The third network element is a UDR or a UDM.

For example, the second information may be preconfigured in the third network element, or is configured in the third network element by using a protocol. A manner in which the third network element determines the second information is not limited in this embodiment of this application. The third network element sends the second information to the first network element. Correspondingly, the first network element receives the second information from the third network element. This is equivalent to a case in which the first network element determines that the policy related to the terminal device is related to the spending limit of the UE.

Manner 2: If a policy related to a slice to which the terminal device subscribes is related to the spending limit of the terminal device, the first network element determines that the policy related to the terminal device is related to the spending limit of the terminal device.

The policy related to the slice to which the terminal device subscribes is a policy that is in the policy related to the terminal device and that is related to the slice to which the terminal device subscribes; or it may be understood as that the policy related to the slice to which the terminal device subscribes is a policy that is in the policy related to the terminal device and that affects service execution of the slice to which the terminal device subscribes. For example, if a controlled object of a policy related to the terminal device includes a slice to which the terminal device subscribes, the policy is a policy related to the slice to which the terminal device subscribes.

That the policy related to the slice to which the terminal device subscribes is related to the spending limit of the terminal device may be understood as that the policy related to the slice to which the terminal device subscribes is affected by the spending limit of the terminal device. For example, a parameter of the slice to which the terminal device subscribes is limited by the spending limit of the terminal device, or a parameter of the slice to which the terminal device subscribes is determined based on the spending limit of the terminal device. The parameter of the slice to which the terminal device subscribes includes a parameter that is configured for the slice and that is for executing a service, for example, one or more of a maximum bit rate, an aggregate maximum bit rate, and a throughput of the slice.

Manner 2 includes the following first sub-manner, second sub-manner, and third sub-manner, which are separately described below.

In the first sub-manner in Manner 2, the first network element may determine, based on first indication information, that the policy related to the slice to which the terminal device subscribes is related to the spending limit of the terminal device. The slice is one or more of slices to which the terminal device subscribes. The first indication information indicates the policy related to the slice and the spending limit of the terminal device.

Optionally, the first indication information may be included in subscription information of the terminal device. The subscription information may be prestored in the first network element, or is configured in the first network element by using a protocol, or is received by the first network element from the third network element.

For example, the subscription information includes first indication information corresponding to a slice 1, and the slice 1 is one of the slices to which the terminal device subscribes. After receiving the first indication information, the first network element determines that the policy related to the terminal device is related to the spending limit of the terminal device.

In the second sub-manner in Manner 2, if parameter information of the slice is related to the spending limit of the terminal device, the first network element determines that the policy related to the slice to which the terminal device subscribes is related to the spending limit of the terminal device. The slice is one or more of slices to which the terminal device subscribes. The parameter information of the slice indicates the parameter of the slice. For content of the parameter of the slice, refer to the foregoing descriptions.

Optionally, the parameter information of the slice is included in subscription information of the terminal device. For a manner in which the first network element obtains the subscription information, refer to the foregoing descriptions. Details are not listed herein.

For the manner in which the first network element obtains the subscription information, refer to the foregoing descriptions. If the first network element determines that a value of the parameter indicated by the parameter information of the slice is a value of the spending limit of the terminal device, or a value of the parameter is determined based on a value of the spending limit of the terminal device, the first network element determines that the policy related to the slice to which the terminal device subscribes is related to the spending limit of the terminal device.

For example, the subscription information includes the slice to which the terminal device subscribes, including a slice 1 included and a maximum throughput of the slice 1. If the first network element determines that the maximum throughput of the slice 1 is related to the spending limit of the terminal device, the first network element determines that a policy related to the slice 1 is related to the spending limit of the terminal device.

In the third sub-manner in Manner 3, if the slice has a preset parameter, the first network element determines that the policy related to the slice is related to the spending limit of the terminal device. The slice is one or more of slices to which the terminal device subscribes. The preset parameter may be preconfigured in the first network element, or is configured in the first network element by using a protocol. For content of the preset parameter, refer to the foregoing descriptions.

For example, subscription information includes parameter information of the slice. After obtaining the subscription information, the first network element may determine, based on the parameter information of the slice, whether the slice has the preset parameter. For a manner in which the first network element obtains the subscription information, refer to the foregoing descriptions. If the slice has the preset parameter, the first network element may directly determine that the policy of the slice is related to the spending limit of the terminal device.

For example, the slice to which the terminal device subscribes includes a slice 2, and the preset parameter includes a maximum throughput. The first network element determines, based on the subscription information, that the slice 2 has the maximum throughput, and the first network element may determine that a policy related to the slice 2 is related to the spending limit of the terminal device.

Manner 3: Second indication information is preconfigured in the first network element, or is specified in a protocol, and the second indication information indicates whether the policy related to the terminal device is related to the spending limit of the terminal device. In this case, the first network element may directly determine, based on the second indication information, whether the policy related to the terminal device is related to the spending limit of the terminal device.

S502: The first network element sends first information to a second network element. Correspondingly, the second network element receives the first information from the first network element. The first information includes an identifier of a first charging network element, and the first charging network element is configured to provide a service for the terminal device.

If this embodiment of this application is applied to the non-roaming scenario shown in FIG. 1A or FIG. 1B, the first charging network element includes, for example, the CHF; or if this embodiment of this application is applied to the roaming scenario shown in FIG. 2A, FIG. 2B, FIG. 3A, FIG. 3B, or FIG. 4, the first charging network element includes, for example, the V-CHF and the H-CHF.

Optionally, the first network element is a first PCF, and the second network element is the first AMF. Alternatively, the first network element is a second AMF, and the second network element is the second PCF. The first AMF and the second AMF are AMFs that provide services for the terminal device, and the first AMF and the second AMF may be a same AMF. The first PCF and the second PCF are PCFs that provide services for the terminal device, and the first PCF and the second PCF may be a same PCF, or may be different PCFs.

For example, this embodiment of this application is applied to the roaming scenario shown in FIG. 2A, FIG. 2B, FIG. 3A, FIG. 3B, or FIG. 4. For example, the first PCF may be the V-PCF, and the second PCF is the H-PCF. For another example, the first PCF may be the H-PCF, and the second PCF is the V-PCF.

The service provided by the first charging network element for the terminal device includes, for example, a control service of the spending limit and/or a charging service. The control service of the spending limit is for monitoring whether an object used by the terminal device exceeds the spending limit, and may be further for notifying another network element of whether the object used by the terminal device exceeds the spending limit. The object used by the terminal device is, for example, one or more of call fees, traffic, or time. For a meaning of the spending limit, refer to the foregoing descriptions. The charging service provided by the first charging network element for the terminal device may be for collecting statistics about spending of the terminal device for the object used by the terminal device.

There may be one or more first charging network elements that provide services for the terminal device. For example, the first charging network element includes the V-CHF and the H-CHF in the roaming scenario shown in FIG. 2A, FIG. 2B, FIG. 3A, FIG. 3B, or FIG. 4. If there are a plurality of first charging network elements, the first information includes identifiers of all of the plurality of charging network elements, or the first information may include identifiers of some of the plurality of charging network elements. An identifier of a charging network element indicates the charging network element. Optionally, the identifier of the charging network element is, for example, address information of the first charging network element.

For example, if this embodiment of this application is applied to the non-roaming scenario shown in FIG. 1A or FIG. 1B, the first charging network element is, for example, the CHF in FIG. 1A or FIG. 1B, and the identifier of the first charging network element includes an identifier of the CHF; or if this embodiment of this application is applied to the roaming scenario shown in FIG. 2A, FIG. 2B, FIG. 3A, FIG. 3B, or FIG. 4, the first charging network element includes, for example, the V-CHF and the H-CHF in FIG. 2A, FIG. 2B, FIG. 3A, FIG. 3B, or FIG. 4, and correspondingly, the identifier of the first charging network element may include an identifier of the V-CHF and/or an identifier of the H-CHF.

In an example, if the embodiment shown in FIG. 5 is applied to a non-roaming scenario (for example, the non-roaming scenario shown in FIG. 1A or FIG. 1B), both the first PCF and the second PCF may be H-PCFs, both the first AMF and the second AMF may be H-AMFs, and a first CHF may be an H-CHF.

In an example, if the embodiment shown in FIG. 5 is applied to a roaming scenario (for example, the roaming scenario shown in FIG. 2A, FIG. 2B, FIG. 3A, FIG. 3B, or FIG. 4), the first PCF may be an H-PCF and/or a V-PCF, the second PCF may be an H-PCF and/or a V-PCF, the first AMF may be a V-AMF, and the second AMF may be a V-AMF. If the first PCF is the V-PCF, a first CHF may be a V-CHF; or if the first PCF is the H-PCF, a first CHF is an H-CHF.

For example, if the policy related to the terminal device includes an AM policy, for a meaning of the AM policy, refer to the foregoing descriptions. In this case, the first PCF or the second PCF may be the V-PCF, and the first CHF may be the V-CHF.

For another example, if the policy related to the terminal device includes the UE policy, for a meaning of the UE policy, refer to the foregoing descriptions. In this case, the first PCF or the second PCF may be the V-PCF and the H-PCF, and the first CHF may be the V-CHF and the H-PCF. The V-PCF interacts with the V-CHF, and the H-PCF interacts with the H-CHF.

In the embodiment shown in FIG. 5, after determining the first charging network element that provides the service for the terminal device, the PCF may send, to the AMF, the first information including the identifier of the first charging network element, or after determining the first charging network element that provides the service for the terminal device, the AMF may send the first information to the PCF, to ensure that the AMF and the PCF can obtain the identifier of the first charging network element. In this way, the AMF and the PCF establish communication with a same first charging network element, the AMF may send charging input information of the terminal device to the first charging network element, and the first charging network element maintains a status of a policy counter based on the charging input information and the spending limit of the terminal device, and sends status information of the policy counter to the PCF. The PCF may determine, based on the status information of the policy counter, the policy related to the terminal device. This is equivalent to a case in which the PCF may determine, based on the charging input information from the AMF, the policy related to the terminal device. In addition, the PCF may determine, based on more information, the policy related to the terminal device. This helps improve accuracy of the determined policy.

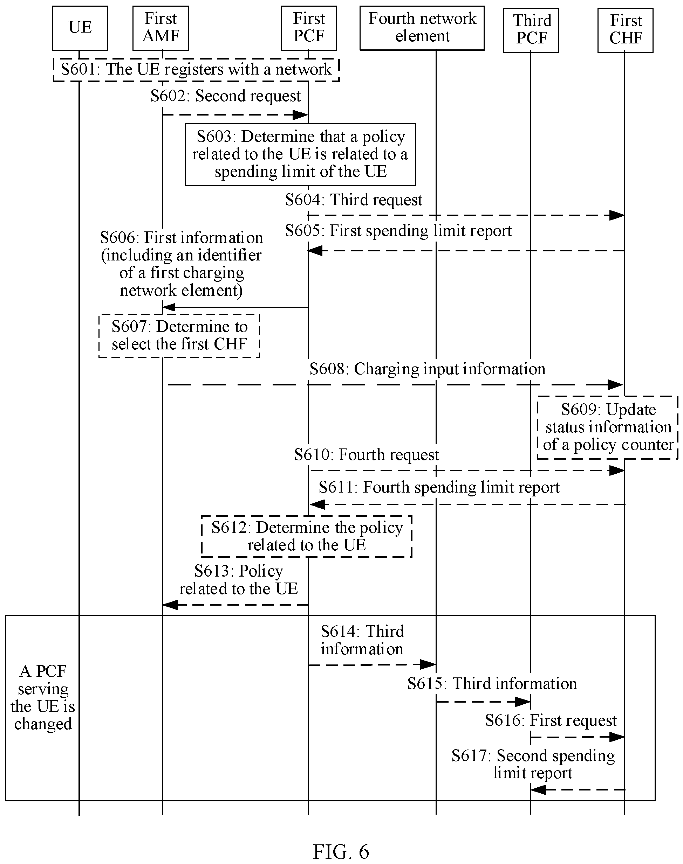

FIG. 6 is a schematic flowchart of a communication method according to an embodiment of this application. In FIG. 6, an example in which the first network element in the embodiment shown in FIG. 5 is a first PCF and the second network element in the embodiment shown in FIG. 5 is a first AMF is used. It should be noted that the communication method shown in FIG. 6 is applicable to the application scenario shown in FIG. 1A, FIG. 1B, FIG. 2A, FIG. 2B, FIG. 3A, FIG. 3B, or FIG. 4. In addition, in FIG. 6, an example in which a terminal device is UE is used, and an example in which a first charging network element is a first CHF is used.

S601: The UE registers with a network.

For example, when a location of the UE is changed, the UE may register with the network through the first AMF. That the UE registers with the network is equivalent to a case in which the UE establishes a communication connection to the first AMF and the first AMF establishes a communication connection to the first PCF. The first PCF and the first AMF provide services for the UE.

S602: The first AMF sends a second request to the first PCF. Correspondingly, the first PCF receives the second request from the first AMF. The second request is for requesting the first PCF to create or modify a policy related to the UE for the terminal device.

For example, if the first PCF has not determined the policy related to the UE before, the first AMF may request, by using the second request, the first PCF to determine the policy related to the UE. Alternatively, if the first PCF has previously determined the policy related to the UE, the first AMF may request, by using the second request, to update or modify the previously determined policy related to the UE.

For a meaning of the policy related to the UE, refer to the foregoing descriptions. The second request includes a subscription permanent identifier (subscription permanent identifier, SUPI) of the UE and/or a subscription correlation identifier (subscription correlation identifier) of the UE.

S603: The first PCF determines that the policy related to the UE is related to a spending limit of the UE.

For a meaning of the spending limit of the UE, refer to the foregoing descriptions. For a manner in which the first PCF implements S603, refer to the content described above. Details are not described herein again.

It should be noted that, in this embodiment of this application, an example in which the first PCF performs S603 after receiving the second request is used for description. However, actually, the first PCF may alternatively trigger execution of step S603 in another case. That is, S601 and S602 are optional steps.

S604: The first PCF sends a third request to the first CHF. Correspondingly, the first CHF receives the third request from the first PCF. The third request is for requesting, from the first CHF, a spending limit report corresponding to the UE.

There are a plurality of manners in which the first PCF determines the first CHF, and the following describes the manners by using examples.

Example 1: An identifier of the first CHF corresponding to the UE may be preconfigured for the first PCF.

For content of the identifier of the first CHF, refer to the foregoing descriptions. Details are not listed herein.

Example 2: The first PCF may obtain an identifier of the first CHF from a third network element.

For a meaning of the third network element, refer to the foregoing descriptions. The identifier of the first CHF corresponding to the UE may be prestored in the third network element, and the first PCF may receive the identifier of the first CHF from the third network element.

Example 3: The first PCF obtains an identifier of the first CHF from an NRF.

For example, the NRF may determine, from one or more CHFs, the first CHF selected for the UE, and send the identifier of the first CHF to the first PCF. Correspondingly, the first PCF receives the identifier of the first CHF from the NRF.

Regardless of a manner to be used by the first PCF to determine the first CHF, in a possible implementation, the first PCF may determine identifiers of a plurality of CHFs, and the first PCF may select a CHF from the plurality of CHFs as the first CHF. The first PCF may use a CHF other than the selected CHF in the plurality of CHFs as a standby CHF.

Further, when the CHF selected by the first PCF is faulty, the first PCF may update the CHF other than the selected CHF in the plurality of CHFs to the first CHF, and communicate with an updated first CHF.

In an example, when the embodiment shown in FIG. 6 is applied to the roaming scenario shown in FIG. 2A, FIG. 2B, FIG. 3A, FIG. 3B, or FIG. 4, the first CHF may include a V-CHF and an H-CHF, and the first PCF may send the third request to both the V-CHF and the H-CHF. Alternatively, the first PCF selects a CHF from the V-CHF and the H-CHF, and sends the third request to the selected CHF. For example, the first PCF selects the CHF from the V-CHF and the H-CHF based on subscription of the V-CHF and the H-CHF.

In this embodiment of this application, the first PCF may send the third request to the first CHF based on the identifier of the first CHF. The third request includes the SUPI of the UE and/or the subscription correlation identifier of the UE. Optionally, the third request further includes a policy counter identifier list corresponding to the UE. The policy counter identifier list corresponding to the UE includes an identifier of a policy counter corresponding to the UE. The identifier of the policy counter is a reference to the policy counter in the CHF for the UE (A reference to a policy counter in the CHF for a subscriber). For a meaning of the policy counter, refer to the foregoing descriptions.

Optionally, the third request is a spending limit control subscription (Nchf_spendinglimitcontrol_subscribe) message.

It should be noted that steps S604 and S603 may be performed in any sequence. For example, the first PCF first performs S604, and then performs S603; or the first PCF first performs S603, and then performs S604.

S605: The first CHF sends a first spending limit report to the first PCF. Correspondingly, the first PCF receives the first spending limit report from the first CHF.

The first spending limit report is, for example, an initial spending limit retrieval (initial spending limit retrieval) or an intermediate spending limit report retrieval (intermediate spending limit report retrieval). It should be noted that, in this embodiment of this application, an example in which the first spending limit report is the initial spending limit retrieval is used for description.

It should be noted that, both the initial spending limit retrieval and the intermediate spending limit report retrieval include status information of the policy counter corresponding to the UE. The status information of the policy counter is, for example, a value of a status of the policy counter. When the first spending limit report is the initial spending limit retrieval, if the third request does not include the policy counter identifier list, a third limit report may further include the policy counter identifier list.

For a meaning of the status of the policy counter, refer to the foregoing descriptions. In this embodiment of this application, the status information of the policy counter may be for transferring spending of the UE from the first CHF to the first PCF.

In an example, S604 and S605 are optional steps.

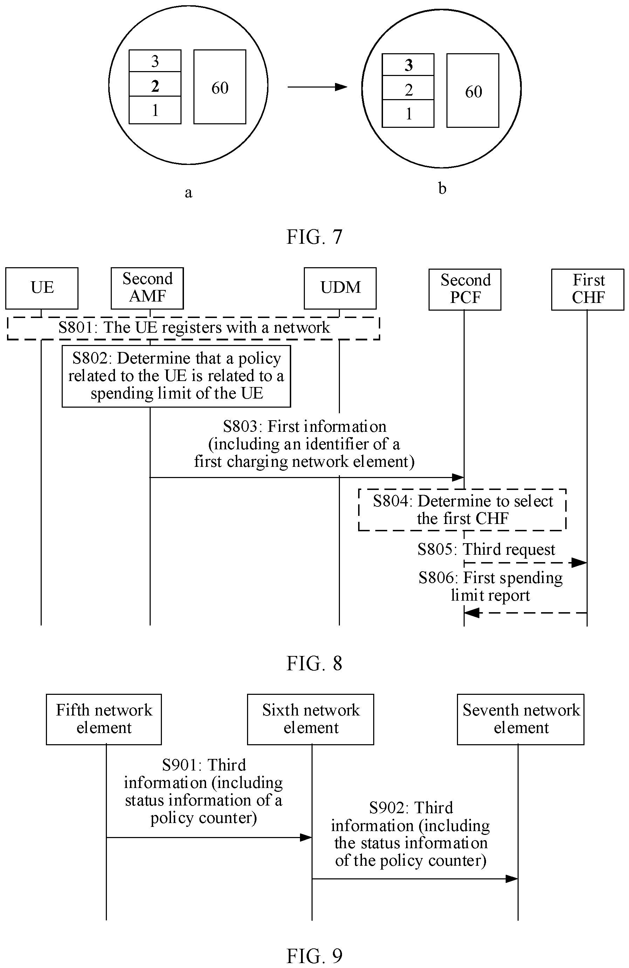

The following describes the policy counter by using an example with reference to a diagram of a status of a policy counter shown in FIG. 7.

As shown in a in FIG. 7, a spending limit of the UE includes that a daily call fee limit of the UE is 60 yuan, and there is one policy counter corresponding to the spending limit. The policy counter includes three statuses. In FIG. 7, 1, 2, and 3 respectively correspond to values of the three possible statuses of the policy counter. A value of the status of the policy counter being 1 indicates that a ratio of a call fee to the spending limit of the UE is between 0 and 1/3; a value of the status of the policy counter being 2 indicates that a ratio of a call fee to the spending limit of the UE is between 1/3 and 2/3; or a value of the status of the policy counter being 3 indicates that a ratio of a call fee to the spending limit of the UE is between 2/3 and 1.

The first CHF determines that a call fee generated by the UE today is 39 yuan, and the first CHF determines that the value of the status of the policy counter is 2, which is indicated by "2" in bold in a in FIG. 7. Correspondingly, the status information of the policy counter is sent in the third spending limit report. In other words, the value of the status of the policy counter is "2".

S606: The first PCF sends first information to the first AMF. Correspondingly, the first AMF receives the first information from the first PCF. The first information includes the identifier of the first CHF.

After determining the identifier of the first CHF, the first PCF may send, to the first AMF, the first information including the identifier of the first CHF. For a manner in which the first PCF determines the identifier of the first CHF, refer to the foregoing descriptions.

In a possible implementation, the first PCF may further send a spending limit usage indication to the first AMF. Correspondingly, the first AMF receives the spending limit usage indication from the first PCF. The spending limit usage indication indicates that the policy related to the UE is related to the spending limit of the UE. The first PCF may separately send the spending limit usage indication and the first information to the first AMF.

In another possible implementation, the first information may further indicate that the policy related to the UE is related to the spending limit of the UE. In this case, the first information may also be referred to as a spending limit usage indication.

It should be noted that the first PCF may perform S604 and S606 in any sequence. For example, the first PCF first performs S606 and then performs S604, or the first PCF simultaneously performs S606 and S604. This is not limited in this embodiment of this application.

S607: The first AMF determines to select the first CHF.

The first AMF may determine, based on the identifier of the first CHF, to select the first CHF corresponding to the identifier of the first CHF. This may be understood as that the first AMF may determine, based on the identifier of the first CHF, to communicate with the first CHF.

It should be noted that, if the identifier of the first CHF includes identifiers of a plurality of CHFs, the first AMF may determine the plurality of CHFs as first CHFs. For example, when the method in this embodiment of this application is applied to the roaming scenario shown in FIG. 2A, FIG. 2B, FIG. 3A, FIG. 3B, or FIG. 4, the identifier of the first CHF may include an identifier of the V-CHF and an identifier of the H-CHF, and the first AMF may select the V-CHF and the H-PCF as first CHFs.

S608: The first AMF sends charging input information to the first CHF. Correspondingly, the first CHF receives the charging input information from the first AMF.

After collecting the charging input information, the first AMF may send the charging input information to the first CHF. Alternatively, when the method in this embodiment of this application is applied to the roaming scenario shown in FIG. 2A, FIG. 2B, FIG. 3A, FIG. 3B, or FIG. 4 and the first CHF includes the V-CHF and the H-CHF, the first CHF sends the charging input information to one of the V-CHF and the H-CHF.

The charging input information indicates information required for charging the UE, and includes, for example, information about a charging event. The charging event is an event that charging is generated for the UE. For example, the charging event is a registration check (for example, subscription and AM policy association), and/or a change of the UE in a presence report area (Change of UE presence in Presence Reporting Area(s)). The registration check means that, for example, the first AMF reports event information of behavior of the UE registering with the network based on the behavior. The event information of the behavior is, for example, an event of the UE registering with the network. The CHF may collect statistics about a fee generated by the UE registering with the network (where for example, the UE is charged 0.1 yuan for each time of registration).

Optionally, the charging input information may further include the subscription permanent identifier and/or the subscription correlation identifier of the UE.

In an example, the first AMF may not collect the charging input information. In this case, the first AMF does not need to perform step S608. That is, step S608 is optional.

S609: The first CHF updates the status information of the policy counter.

In this embodiment of this application, an example in which the charging input information causes the update of the status information of the policy counter is used for description. However, it should be noted that the charging input information may not cause the update of the status information of the policy counter.

Still refer to the example shown in FIG. 7. The first CHF receives the charging input information sent by the first AMF, and determines that the UE makes a call for one hour from 14:00 to 15:00 and that a call fee is 21, to determine that the UE accumulatively generates a call fee of 60 yuan, and the first CHF determines that the value of the status of the policy counter corresponding to the UE is updated to 3.

In an example, S609 is an optional step.

S610: The first PCF sends a fourth request to the first CHF. Correspondingly, the first CHF receives the fourth request from the first PCF.

In an example, if the embodiment shown in FIG. 6 is applied to the roaming scenario shown in FIG. 2A, FIG. 2B, FIG. 3A, FIG. 3B, or FIG. 4, the first CHF may include the V-CHF and the H-CHF, and the first PCF may send the fourth request to both the V-CHF and the H-CHF. Alternatively, the first PCF selects a CHF from the V-CHF and the H-CHF, and sends the fourth request to the selected CHF. For example, the first PCF selects the CHF from the V-CHF and the H-CHF based on subscription of the V-CHF and the H-CHF.

The fourth request is for requesting a spending limit report from the first CHF. The fourth request includes the subscription permanent identifier and/or the subscription correlation identifier of the UE. Optionally, the fourth request further includes a first request of the UE, and further includes the policy counter identifier list corresponding to the UE.

S611: The first CHF sends a fourth spending limit report to the first PCF. Correspondingly, the first PCF receives the fourth spending limit report from the first CHF.

If the first CHF does not perform S605, the fourth spending limit report may be an initial spending limit retrieval. If the first CHF performs S605, the fourth spending limit report may be an intermediate spending limit report retrieval. In this embodiment of this application, an example in which the fourth spending limit report is the intermediate spending limit report retrieval is used.

The fourth spending limit report includes updated status information of the policy counter.

The example shown in FIG. 7 is still used. The first CHF determines that the value of the status of the policy counter is updated to 3. Correspondingly, the fourth spending limit report includes the updated status information of the policy counter. In other words, the value of the status of the policy counter is 3.

S612: The first PCF determines the policy related to the UE.

For example, if the first PCF has not determined the policy related to the UE before, the first PCF may determine the policy related to the UE. Alternatively, the first PCF determines a new policy related to the UE, to update or modify the previously determined policy related to the UE.

For example, the first PCF may determine, based on the status information of the policy counter in the fourth spending limit report, the policy related to the UE. For a meaning and content of the policy related to the UE, refer to the foregoing descriptions. The policy related to the UE includes, for example, decreasing or increasing a UE-Slice-MBR.

The example in FIG. 7 is still used. After determining that a call fee generated by the UE in one day reaches the spending limit (that is, 60 yuan), the first PCF determines that the policy related to the UE includes decreasing an AMBR corresponding to the UE.

In an example, S612 is an optional step.

S613: The first PCF sends the policy related to the UE to the first AMF. Correspondingly, the first AMF receives the policy related to the UE from the first PCF.

If the policy related to the UE includes a mobility management policy, the first AMF may execute the mobility management policy.

If the policy related to the UE includes a UE policy, the first PCF may send the UE policy to the first AMF. Correspondingly, the first AMF receives the UE policy from the first PCF. The first AMF may send the UE policy to the UE. Correspondingly, the UE receives the UE policy from the first AMF. Further, the UE may execute the UE policy.

It should be noted that the status information of the policy counter may not be changed. In this case, steps S609 to S613 do not need to be performed. That is, S609 to S613 are optional steps.

S614: The first PCF sends third information to a fourth network element. Correspondingly, the fourth network element receives the third information from the first PCF.

When the location of the UE is changed or in another case, a PCF serving the UE may be changed, and an AMF serving the UE may also be changed. In this embodiment of this application, an example in which the PCF serving the UE is changed from the first PCF to a third PCF, and an example in which the AMF serving the UE is changed from the first AMF to a third AMF are used for description. It should be noted that, because a PLMN serving the UE may be changed from a VPLMN to an HPLMN, may be changed from an HPLMN to a VPLMN, or may be changed from a VPLMN to another VPLMN, the third PCF may be a V-PCF and/or an H-PCF. For example, if the PLMN serving the UE is changed from the VPLMN to the HPLMN, the first PCF may be a V-PCF and/or an H-PCF, and the third PCF may be the H-PCF. For another example, if the PLMN serving the UE is changed from the HPLMN to the VPLMN, the first PCF may be an H-PCF, and the third PCF may be the V-PCF and the H-PCF.

In this case, how the first PCF and the third PCF synchronize the status information of the policy counter is involved. In this embodiment of this application, the first PCF may send the third information to the fourth network element. The fourth network element is the first AMF or a UDR.

In an example, the third information includes one or more of the status information of the policy counter, the subscription correlation identifier, the subscription permanent identifier, and the identifier of the first CHF.

If the third information includes the status information of the policy counter, the status information of the policy counter is latest status information of the policy counter received by the first PCF from the first CHF.

S615: The fourth network element sends the third information to the third PCF. Correspondingly, the third PCF receives the third information from the fourth network element.
1. When the fourth network element is the first AMF, the first AMF may send the third information to the third AMF. Correspondingly, the third AMF receives the third information from the first AMF. The third AMF sends the third information to the third PCF. Correspondingly, the third PCF receives the third information from the third AMF.

In a possible implementation, if the third information sent by the first PCF to the first AMF includes the identifier of the first CHF, the third AMF may obtain the identifier of the first CHF from the first AMF, and send the identifier of the first CHF to the third PCF. For example, the third information sent by the third AMF to the third PCF includes the identifier of the first CHF. In this way, the third AMF and the third PCF may also determine a same CHF.

In another possible implementation, both the first PCF and the first AMF determine the first CHF, and the identifier of the first CHF may be prestored in the first AMF. In this case, even if the first PCF does not send the identifier of the first CHF to the first AMF, the first AMF may send the identifier of the first CHF to the third AMF. Further, the third AMF may further send the identifier of the first CHF to the third PCF. For example, the third information sent by the third AMF to the third PCF includes the identifier of the first CHF. In this way, the third AMF and the third PCF may also determine a same CHF.

In still another possible implementation, the first AMF does not obtain the identifier of the first CHF from the first PCF, and does not store the identifier of the first CHF. In this case, the third AMF may determine a first CHF that is configured to serve the UE, and send an identifier of the first CHF to the third PCF. Correspondingly, the third PCF receives the identifier of the first CHF from the third AMF. Alternatively, the third PCF may determine a first CHF that is configured to serve the UE, and send an identifier of the first CHF to the third AMF. Correspondingly, the third AMF receives the identifier of the first CHF from the third PCF.

It should be noted that, when the PCF serving the UE is changed from the first PCF to the third PCF, and the AMF serving the UE is changed from the first AMF to the third AMF, the third AMF may directly sense an identifier of the third PCF, to send the third information to the third PCF.

2. When the fourth network element is the UDR, the UDR sends the third information to the third PCF. Correspondingly, the third PCF receives the third information from the UDR.

In this case, the UDR may not directly sense that the PCF serving the UE is changed from the first PCF to the third PCF. Therefore, in this embodiment of this application, the third PCF may send a fourth request to the UDR. Correspondingly, the UDR receives the fourth request from the third PCF. The fourth request includes the subscription correlation identifier and/or the subscription permanent identifier. After receiving the fourth request, the UDR determines that the PCF currently serving the UE is the third PCF. This is equivalent to a case in which the UDR senses that the first PCF serving the UE is changed to the third PCF, so that the UDR may send the third information to the third PCF.

In a possible implementation, the identifier of the first CHF is prestored in the UDR. For example, the third information sent by the first PCF to the UDR includes the identifier of the first CHF. In this case, the third PCF may obtain the identifier of the first CHF from the UDR, and send the identifier of the first CHF to the third AMF. For example, the third information sent by the third AMF to the third PCF includes the identifier of the first CHF. In this way, the third AMF and the third PCF may also determine a same CHF.

In another possible implementation, both the first PCF and the first AMF determine the first CHF, and the identifier of the first CHF may be prestored in the first AMF. In this case, even if the identifier of the first CHF is not prestored in the UDR, the first AMF may send the identifier of the first CHF to the third AMF. Further, the third AMF may further send the identifier of the first CHF to the third PCF. For example, the third information sent by the third AMF to the third PCF includes the identifier of the first CHF. In this way, the third AMF and the third PCF may also determine a same CHF.

In still another possible implementation, the third AMF does not obtain the identifier of the first CHF from the first AMF, and the third PCF does not obtain the identifier of the first CHF from the UDR. In this case, the third AMF may determine a first CHF that is configured to serve the UE, and send an identifier of the first CHF to the third PCF. Correspondingly, the third PCF receives the identifier of the first CHF from the third AMF. Alternatively, the third PCF may determine a first CHF that is configured to serve the UE, and send an identifier of the first CHF to the third AMF. Correspondingly, the third AMF receives the identifier of the first CHF from the third PCF.

S616: The third PCF sends a first request to the first CHF. Correspondingly, the first CHF receives the fourth request from the third PCF. The first request is for requesting a spending limit report from the first CHF.

In an example, if the embodiment shown in FIG. 6 is applied to the roaming scenario shown in FIG. 2A, FIG. 2B, FIG. 3A, FIG. 3B, or FIG. 4, the first CHF may include the V-CHF and the H-CHF, and the third PCF may send the first request to both the V-CHF and the H-CHF. Alternatively, the third PCF selects a CHF from the V-CHF and the H-CHF, and sends the first request to the selected CHF. For example, the third PCF selects the CHF from the V-CHF and the H-CHF based on subscription of the V-CHF and the H-CHF.

The first request may include the subscription correlation identifier and/or the subscription permanent identifier of the UE.

If the third information does not include the status information of the policy counter, the third PCF may request, from the first CHF based on the subscription correlation identifier and/or the subscription permanent identifier of the UE, the spending limit report corresponding to the UE.

If the third information includes the status information of the policy counter, the third PCF may not need to perform step S616. That is, S616 is an optional step.

It should be noted that, regardless of whether the third information includes the status information of the policy counter, the third PCF may not need to request the initial spending limit retrieval of the UE from the first CHF. Status information of the policy counter prestored in the first PCF belongs to context information established by the first PCF in the first CHF.

S617: The first CHF sends a second spending limit report to the third PCF. Correspondingly, the third PCF receives the second spending limit report from the first CHF.

That the first CHF determines that the subscription correlation identifier and/or the subscription permanent identifier in the first request are/is of the UE is equivalent to a case in which it is determined that the PCF of the UE is changed from the first PCF to the third PCF, and the first CHF may send the second spending limit report to the third PCF. The second spending limit report includes updated status information of the policy counter.

It should be noted that if the PCF serving the UE is not changed, steps S613 to S616 do not need to be performed. That is, S614 to S617 are optional steps.

In a possible implementation, the third PCF may determine, based on the second spending limit report, the policy related to the UE. For example, the third PCF may determine, based on the second spending limit report, a new policy related to the UE, to update the policy that is related to the UE and that is determined by the first PCF.

In an example, S601 and S602, S604 and S605, and S607 to S617 in FIG. 6 are optional steps, and are shown by using dashed lines in FIG. 6.

It should be noted that for possible implementations of the first PCF, the first CHF, and the first AMF, refer to the content described in FIG. 5. Details are not listed herein.

In the embodiment shown in FIG. 6, after determining that the CHF serving the UE is the first CHF, the first PCF may send the identifier of the first CHF to the first AMF, and both the first AMF and the first PCF may establish a connection to the first CHF, so that the first PCF may indirectly determine, based on the charging input information reported by the first AMF, the policy related to the UE. This provides a mechanism to support the PCF in determining, based on the status of the policy counter, the policy related to the UE. In addition, after the first PCF serving the UE is changed to the third PCF, this embodiment of this application further provides a mechanism for the first PCF and the third PCF to synchronize the status of the policy counter corresponding to the UE, so that the third PCF can determine, based on a latest status of the policy counter, the policy related to the UE, to ensure accuracy of determining, by the third PCF, the policy related to the UE. In addition, because the third PCF has synchronized a part of the context information established by the first PCF in the first CHF, the third PCF may directly reuse the context information established by the first PCF in the first CHF, so that a quantity of interactions between the third PCF and the first CHF is reduced. This helps reduce transmission overheads.

FIG. 8 is a schematic flowchart of a communication method according to an embodiment of this application. In the embodiment shown in FIG. 8, an example in which the first network element in the embodiment in FIG. 5 is a second AMF and the second network element in the embodiment in FIG. 5 is a second PCF is used. It should be noted that the communication method shown in FIG. 8 is applicable to the application scenario shown in FIG. 1A, FIG. 1B, FIG. 2A, FIG. 2B, FIG. 3A, FIG. 3B, or FIG. 4. In addition, in the embodiment shown in FIG. 8, an example in which a terminal device is UE and a charging network element is a CHF is used.

S801: The UE registers with a network.

For a meaning of registration of the UE with the network, refer to the foregoing content.

S802: The second AMF determines that a policy related to the UE is related to a spending limit of the UE.

For a manner in which the second AMF implements S802, refer to the content described in FIG. 5. Details are not listed herein.

S803: The second AMF sends first information to the second PCF. Correspondingly, the second PCF receives the first information from the second AMF. The first information includes an identifier of a first CHF.

For a meaning of the first CHF, refer to the foregoing descriptions. For a manner in which the second AMF determines the identifier of the first CHF, refer to the foregoing manner in which the first PCF determines the identifier of the first CHF. Details are not listed herein.

S804: The second PCF determines to select the first CHF.

The second PCF may determine, based on the identifier of the first CHF, to select the first CHF. For content of determining, by the second PCF, to select the first CHF, refer to the foregoing content of determining, by the first AMF, to select the first CHF. Details are not listed herein.

S805: The second PCF sends a third request to the first CHF. Correspondingly, the first CHF receives the third request from the second PCF. For a meaning of the third request, refer to the foregoing descriptions.

In an example, if the embodiment shown in FIG. 8 is applied to the roaming scenario shown in FIG. 2A, FIG. 2B, FIG. 3A, FIG. 3B, or FIG. 4, the first CHF may include a V-CHF and an H-CHF, and the second PCF may send the third request to both the V-CHF and the H-CHF. Alternatively, the second PCF selects a CHF from the V-CHF and the H-CHF, and sends the third request to the selected CHF. For example, the second PCF selects the CHF from the V-CHF and the H-CHF based on subscription of the V-CHF and the H-CHF.

S806: The first CHF sends a first spending limit report to the second PCF. Correspondingly, the second PCF receives the first spending limit report from the first CHF. For a meaning of the first spending limit report, refer to the foregoing descriptions.

In a possible implementation, the second PCF may also determine, based on a status of a policy counter, the policy related to the UE. For a manner in which the second PCF determines, based on the status of the policy counter, the policy related to the UE, refer to the foregoing descriptions in which the first PCF determines the policy related to the UE. Details are not listed herein.

In a possible implementation, if a PCF serving the UE is changed from the second PCF to a third PCF, the second PCF may further send third information to a fourth network element. Correspondingly, the fourth network element receives the third information from the second PCF. Further, the fourth network element may send the third information to the third PCF. Correspondingly, the third PCF receives the third information from the fourth network element. For a meaning of the third information, refer to the content described in FIG. 5. Details are not listed herein. The fourth network element in this embodiment of this application is the second AMF or a UDR.

It should be noted that, for possible implementations of the first PCF, the first CHF, and the first AMF in this embodiment of this application, refer to the content described in FIG. 5, and for a possible implementation of the third PCF, refer to the content described in FIG. 6.

In an example, S801 and S804 to S806 in FIG. 8 are optional steps, and are shown by using dashed lines in FIG. 8.

In the embodiment shown in FIG. 8, after determining that a CHF serving the UE is the first CHF, the second AMF may send the identifier of the first CHF to the second CPF, so that both the second AMF and the second PCF establish a connection to the first CHF, and the PCF may indirectly determine, based on charging input information reported by the AMF, the policy related to the UE. This provides a mechanism to support determining, based on the SL, the policy related to the UE. In addition, after the second PCF serving the UE is changed to the third PCF, this embodiment of this application further provides a mechanism for the second PCF and the third PCF to synchronize a status of the policy counter corresponding to the UE, so that the third PCF can determine, based on a latest status of the policy counter, the policy related to the UE, to ensure accuracy of determining, by the third PCF, the policy related to the UE.

To provide a mechanism for a status of a policy counter, an embodiment of this application further provides another communication method. In the communication method, a fifth network element may send, to a sixth network element, third information including status information of a policy counter, and the sixth network element may send the third information to a seventh network element, so that the fifth network element and the seventh network element can synchronize the status information of the policy counter. This provides the mechanism for synchronizing the status of the policy counter.

FIG. 9 is a flowchart of a communication method according to an embodiment of this application. It should be noted that the communication method shown in FIG. 9 is applicable to the application scenario shown in FIG. 1A, FIG. 1B, FIG. 2A, FIG. 2B, FIG. 3A, FIG. 3B, or FIG. 4. In the embodiment shown in FIG. 9, an example in which a control policy network element is a PCF, a mobility management network element is an AMF, and a terminal device is UE is used for description.

S901: A fifth network element sends third information to a sixth network element. Correspondingly, the sixth network element receives the third information from the fifth network element. The third information includes status information of a policy counter.

Optionally, the third information includes one or more of a subscription correlation identifier, a subscription permanent identifier, and an identifier of a first CHF.

The fifth network element is a first PCF, and the sixth network element is a UDR or a first AMF. The first PCF is a PCF serving the UE, and the first AMF is an AMF serving the UE.

For example, the fifth network element may receive the status information of the policy counter from the first CHF. For a meaning of the status information of the policy counter, refer to the foregoing descriptions.

The fifth network element is the first CHF, and the sixth network element is the UDR. The first CHF is a CHF serving the UE. In this case, the status information of the policy counter may be prestored in the fifth network element.

S902: The sixth network element sends the third information to a seventh network element. Correspondingly, the seventh network element receives the third information from the sixth network element.

The sixth network element is the UDR, and the seventh network element is a third PCF or a second CHF. The third PCF is a PCF to which a PCF serving the UE is changed from the first PCF. The second CHF is a CHF to which a CHF serving the UE is changed from the first CHF.

The sixth network element is the first AMF, and the seventh network element is a third AMF. The third AMF is an AMF to which an AMF serving the UE is changed from the first AMF. Further, the third AMF may send the third information to the third PCF. Correspondingly, the third PCF may receive the third information from the third AMF.

It should be noted that, for possible implementations of the first PCF, the first CHF, and the first AMF in this embodiment of this application, refer to the content described in FIG. 5, and for a possible implementation of the third PCF, refer to the content described in FIG. 6.

In this embodiment of this application, if the PCF serving the UE is switched from the first PCF to the third PCF, the third PCF may synchronize, by using the method in the embodiment shown in FIG. 9, the status information of the policy counter stored in the first PCF, to synchronize the status information of the policy counter. Because the third PCF synchronizes the status information of the policy counter of the first PCF, the third PCF may directly reuse the status information of the policy counter, and does not need to request the status information of the policy counter from the first CHF, so that a quantity of interactions between the third PCF and the first CHF is reduced. This helps reduce transmission overheads between the third PCF and the first CHF. Alternatively, if the CHF serving the UE is changed from the first CHF to the second CHF, the second CHF may obtain, from the UDR, a status of the policy counter prestored in the first CHF, so that the first CHF and the second CHF synchronize the status information of the policy counter of the UE. Because the second CHF synchronizes the status of the policy counter prestored in the first CHF, the status information of the policy counter does not need to be re-determined, so that a processing amount of the second CHF is reduced.

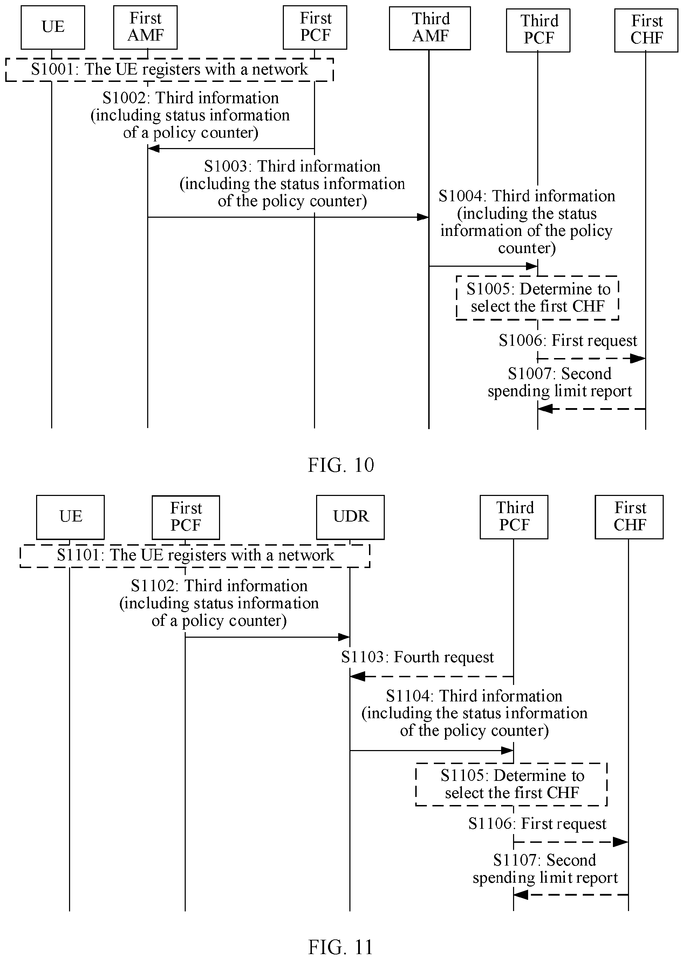

FIG. 10 is a schematic flowchart of a communication method according to an embodiment of this application. In the embodiment shown in FIG. 10, an example in which the fifth network element in the embodiment shown in FIG. 9 is a first PCF, the sixth network element in the embodiment shown in FIG. 9 is a first AMF, and the seventh network element in the embodiment shown in FIG. 9 is a third AMF or a third PCF is used. In addition, in the embodiment shown in FIG. 10, an example in which a terminal device is UE, a charging network element is a CHF, a PCF serving the UE is changed from the first PCF to the third PCF, and an AMF serving the UE is changed from the first AMF to the third AMF is used for description.

S 1001: The UE registers with a network.

For a meaning of registration of the UE with the network, refer to the foregoing descriptions.

S1002: The first PCF sends third information to the first AMF. Correspondingly, the first AMF receives the third information from the first PCF. The third information includes status information of a policy counter.

When the first PCF provides a service for the UE, the first PCF may request the status information of the policy counter from a first CHF, and receive the status information of the policy counter from the first CHF. For a meaning of the status information of the policy counter, refer to the foregoing descriptions. When the first PCF determines that the PCF serving the UE is changed from the first PCF to the third PCF, the first PCF may send, to the first AMF, the third information that includes the status information of the policy counter.

Optionally, the third information further includes an identifier of the first CHF. Optionally, the third information further includes a subscription correlation identifier and/or a subscription permanent identifier.

Optionally, the third information may be an initial spending limit subscription message.

In a possible implementation, the first PCF determines that a policy related to the UE is related to a spending limit of the UE.

For meanings of a manner in which the first PCF determines that the policy related to the UE is related to the spending limit of the UE, the policy related to the UE, and the spending limit of the UE, refer to the foregoing descriptions. Details are not listed herein.

In a possible implementation, the first AMF may store the third information in a context of the UE. That is, the context of the UE includes the third information.

S 1003: The first AMF sends the third information to the third AMF. Correspondingly, the third AMF receives the third information from the first AMF. For a meaning of the third information, refer to the foregoing descriptions.

Optionally, when determining that the AMF serving the UE is changed from the first AMF to the third AMF, the first AMF performs step S 1003.

If the third information is included in the context of the UE of the first AMF, the first AMF may send the context of the UE to the third AMF. This is equivalent to a case in which the third information is sent.

S 1004: The third AMF sends third information to the third PCF. Correspondingly, the third PCF receives the third information from the third AMF. For a meaning of the third information, refer to the foregoing descriptions.

Optionally, if the third AMF determines that the PCF serving the UE is switched from the first PCF to the third PCF, the third AMF may perform step S1004. Alternatively, the third AMF may directly perform step S1004 without considering whether the PCF serving the UE is changed.

Optionally, the third information may be carried in a policy request. That the third AMF sends the policy request to the third PCF is equivalent to a case in which the third information is sent. The policy request is for requesting the third PCF to create or modify the policy related to the UE.

Optionally, the third information includes an identifier of the first CHF. In this case, both the third PCF and the third AMF determine to select the identifier of the first CHF, to ensure that the third PCF and the third AMF select a same charging network element.

S1005: The third PCF determines to select the first CHF.

If the third information includes the identifier of the first CHF, the third PCF may select the first CHF based on the third information.

Alternatively, if the third information does not include the identifier of the first CHF, but the third PCF receives the identifier of the first CHF from the third AMF, the third PCF may determine, based on the identifier of the first CHF, to select the first CHF.

Alternatively, if the third information does not include the identifier of the first CHF, the third PCF may determine the first CHF serving the UE, determine to select the first CHF, and send the identifier of the first CHF to the third AMF. Correspondingly, the third AMF receives the identifier of the first CHF from the third PCF.

For content of determining, by a second PCF, to select the first CHF, refer to the foregoing content of determining, by the first AMF, to select the first CHF. Details are not listed herein.

S1006: The third PCF sends a first request to the first CHF. Correspondingly, the first CHF receives the first request from the third PCF. The first request is for requesting a spending limit report of the UE.

In an example, if the embodiment shown in FIG. 10 is applied to the roaming scenario shown in FIG. 2A, FIG. 2B, FIG. 3A, FIG. 3B, or FIG. 4, the first CHF may include a V-CHF and an H-CHF, and the third PCF may send the first request to both the V-CHF and the H-CHF. Alternatively, the third PCF selects a CHF from the V-CHF and the H-CHF, and sends the first request to the selected CHF. For example, the third PCF selects the CHF from the V-CHF and the H-CHF based on subscription of the V-CHF and the H-CHF.

For a meaning of the first request, refer to the foregoing descriptions. Optionally, if the third information does not include the status information of the policy counter, the third PCF may request, from the first CHF based on the subscription correlation identifier and/or the subscription permanent identifier of the UE, the spending limit report corresponding to the UE. If the third information includes the status information of the policy counter, the third PCF may not need to perform step S1006. That is, S1006 is an optional step.

It should be noted that, regardless of whether the third information includes the status information of the policy counter, the third PCF may not need to request an initial spending limit retrieval of the UE from the first CHF. For a reason why the third PCF does not need to request the initial spending limit retrieval from the first CHF, refer to the content described in FIG. 6. Details are not described herein again.

S1007: The first CHF sends a second spending limit report to the third PCF. Correspondingly, the third PCF receives the second spending limit report from the first CHF.

For a meaning of the second spending limit report, also refer to the foregoing descriptions.

In a possible implementation, if the third information does not include the identifier of the first CHF, the third PCF determines the identifier of the first CHF serving the UE. For a manner in which the third PCF determines the identifier of the first CHF, refer to the foregoing content in which the first PCF determines the identifier of the first CHF. In addition, the third PCF may send the identifier of the first CHF to the third AMF. Correspondingly, the third AMF receives the identifier of the first CHF from the third PCF. This ensures that the third AMF and the third PCF may select a same CHF.

In a possible implementation, the third PCF may determine that the policy related to the UE is related to the spending limit of the UE. For content of determining that the policy related to the UE is related to the spending limit of the UE, refer to the foregoing descriptions.

In an example, S1001 and S1005 to S1007 in FIG. 10 are optional steps, and are shown by using dashed lines in FIG. 10.

It should be noted that, for possible implementations of the first PCF, the first CHF, and the first AMF, refer to the content described in FIG. 5, and for a possible implementation of the third PCF, refer to the content described in FIG. 6.

In the embodiment shown in FIG. 10, when the PCF serving the UE is changed from the first PCF to the third PCF, the first PCF may send the third information to the first AMF, the first AMF sends the third information to the third AMF, and the third PCF may receive the third information from the third AMF, so that the first PCF and the third PCF synchronize the status information of the policy counter. The third PCF may directly receive the status information of the policy counter of the UE from the third AMF, and does not need to request the status information of the policy counter from the first CHF, so that a quantity of interactions between the third PCF and the first CHF is reduced. This helps reduce transmission overheads between the third PCF and the first CHF.

FIG. 11 is a schematic flowchart of a communication method according to an embodiment of this application. In FIG. 11, an example in which the fifth network element in the embodiment shown in FIG. 9 is a first PCF, the sixth network element in the embodiment shown in FIG. 9 is a UDR, and the seventh network element in the embodiment shown in FIG. 9 is a third PCF is used for description. In addition, in the embodiment shown in FIG. 11, an example in which a terminal device is UE, a charging network element is a CHF, a PCF serving the UE is changed from the first PCF to the third PCF, and an AMF serving the UE is changed from a first AMF to a third AMF is used for description.

S1101 The UE registers with a network.

S1102: The first PCF sends third information to the UDR. Correspondingly, the UDR receives the third information from the first PCF. For a meaning of the third information, refer to the foregoing descriptions.

In a possible implementation, the first PCF determines that a policy related to the UE is related to a spending limit of the UE, and the first PCF performs step S1102. For a manner in which the first PCF determines that the policy related to the UE is related to the spending limit of the UE, refer to the foregoing descriptions.

Optionally, the UDR receives the third information, and stores the third information. If the third information includes a subscription correlation identifier and/or a subscription permanent identifier, the UDR may store a status of a policy counter by using the subscription correlation identifier and/or the subscription permanent identifier as a reference.

S1103: The third PCF sends a fourth request to the UDR. Correspondingly, the UDR receives the fourth request from the third PCF. The fourth request is for requesting status information of the policy counter corresponding to the UE.

The fourth request includes one or more of the subscription correlation identifier, the subscription permanent identifier, or an identifier of a first CHF.

S1104: The UDR sends the third information to the third PCF. Correspondingly, the third PCF receives the third information from the UDR. For a meaning of the third information, refer to the foregoing descriptions.

In a possible implementation, if the third information includes the identifier of the first CHF, the third PCF may send the identifier of the first CHF to the third AMF. Correspondingly, the third AMF receives the identifier of the first CHF from the third PCF.

S1105: The third PCF determines to select the first CHF.

For example, the third information includes the identifier of the first CHF, and the third PCF may determine, based on the identifier of the first CHF, to select the first CHF.

Alternatively, for example, if the third information does not include the identifier of the first CHF, the third PCF may determine the identifier of the first CHF. For a manner of determining the identifier of the first CHF, refer to the foregoing descriptions. Then, the third PCF sends the identifier of the first CHF to the third AMF. Correspondingly, the third AMF receives the identifier of the first CHF from the third PCF.

For content of determining, by the third PCF, to select the first CHF, refer to the foregoing content of determining, by the first AMF, to select the first CHF. Details are not listed herein.

S1106: The third PCF sends a first request to the first CHF. Correspondingly, the first CHF receives the first request from the third PCF.

In an example, when the embodiment shown in FIG. 11 is applied to the roaming scenario shown in FIG. 2A, FIG. 2B, FIG. 3A, FIG. 3B, or FIG. 4, the identifier of the first CHF may include a V-CHF and an H-CHF, and the third PCF may send the first request to both the V-CHF and the H-CHF. Alternatively, the third PCF selects a CHF from the V-CHF and the H-CHF, and sends the first request to the selected CHF. For example, the third PCF selects the CHF from the V-CHF and the H-CHF as the first CHF based on subscription of the V-CHF and the H-CHF.

For a meaning of the first request, refer to the foregoing descriptions. The first request includes the subscription correlation identifier and/or the subscription permanent identifier.

Optionally, if the third information does not include the status information of the policy counter, the third PCF may request, from the first CHF based on the subscription correlation identifier and/or the subscription permanent identifier of the UE, a spending limit report corresponding to the UE. If the third information includes the status information of the policy counter, the third PCF may not need to perform step S1106. That is, S1106 is an optional step.

It should be noted that, regardless of whether the third information includes the status information of the policy counter, the third PCF may not need to request an initial spending limit retrieval of the UE from the first CHF.

S1107: The first CHF sends a second spending limit report to the third PCF. Correspondingly, the third PCF receives the second spending limit report from the first CHF. For a meaning of the second spending limit report, refer to the foregoing descriptions.

The first CHF determines, based on the subscription correlation identifier and/or the subscription permanent identifier in the first request, that the subscription correlation identifier and/or the subscription permanent identifier correspond/corresponds to the UE. This is equivalent to a case in which it is determined that the PCF serving the UE is changed from the first PCF to the third PCF. In this case, the first CHF may send the second spending limit report corresponding to the UE to the third PCF.

In an example, S1101, S1103, and S1105 to S1107 in FIG. 11 are optional steps, and are shown by using dashed lines in FIG. 11.

It should be noted that, for possible implementations of the first PCF, the first CHF, and the first AMF in this embodiment of this application, refer to the content described in FIG. 5, and for a possible implementation of the third PCF, refer to the content described in FIG. 6.

In the embodiment shown in FIG. 11, when the PCF serving the UE is changed from the first PCF to the third PCF, the first PCF may send the third information to the UDR, and the third PCF may receive the third information from the UDR, so that the first PCF and the third PCF synchronize the status information of the policy counter. The third PCF may directly obtain the status information of the policy counter of the UE from the UDR, and does not need to request the status information of the policy counter from the first CHF, so that a quantity of interactions between the third PCF and the first CHF is reduced. This helps reduce transmission overheads between the third PCF and the first CHF.

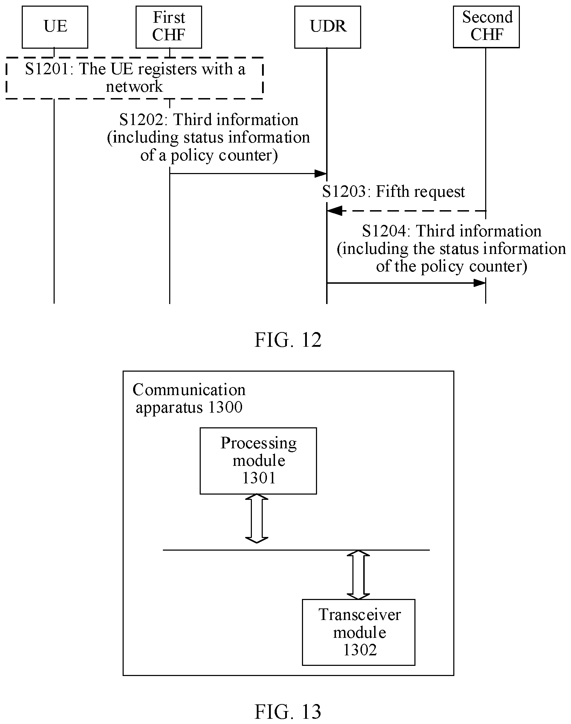

FIG. 12 is a schematic flowchart of a communication method according to an embodiment of this application. In the embodiment shown in FIG. 12, an example in which the fifth network element in the embodiment shown in FIG. 9 is a first CHF, the sixth network element in the embodiment shown in FIG. 9 is a UDR, and the seventh network element in the embodiment shown in FIG. 9 is a second CHF is used for description. In addition, in the embodiment shown in FIG. 12, an example in which a terminal device is UE, a charging network element is a CHF, and a CHF serving the UE is changed from the first CHF to the second CHF is used for description.

S1201: The UE registers with a network.

For a meaning of registration of the UE with the network, refer to the foregoing descriptions.

S1202: The first CHF sends third information to the UDR. Correspondingly, the UDR receives the third information from the first CHF.

The third information in this embodiment of this application includes status information of a policy counter. Optionally, the third information further includes a subscription correlation identifier and/or a subscription permanent identifier.

Optionally, the UDR receives the third information, and stores the third information. If the third information includes the subscription correlation identifier and/or the subscription permanent identifier, the UDR may store the status information of the policy counter by using the subscription correlation identifier and/or the subscription permanent identifier as a reference.

S1203: The second CHF sends a fifth request to the UDR. Correspondingly, the UDR receives the fifth request from the second CHF.

The fifth request is for requesting the status information of the policy counter corresponding to the UE. The fifth request includes a subscription correlation identifier and/or a subscription permanent identifier.

In a possible implementation, a first PCF may send a service indication to the second CHF. Correspondingly, the second CHF receives the service indication from the first PCF. The service indication indicates the second CHF to serve the UE. The first PCF is a PCF serving the UE. For a manner in which the first PCF determines an identifier of the second CHF serving the UE, refer to the foregoing content in which the first PCF determines the identifier of the first CHF. Details are not listed herein.

Optionally, the service indication further includes the subscription correlation identifier and/or the subscription permanent identifier. In this way, the second CHF may determine that the second CHF serves the UE. Further, the second CHF performs step S1203.

S1204: The UDR sends the third information to the second CHF. Correspondingly, the second CHF receives the third information from the UDR. The third information includes the status information of the policy counter.

The UDR determines, based on the subscription correlation identifier and/or the subscription permanent identifier in the fifth request, that the CHF serving the UE is changed from the first CHF to the second CHF, and the UDR may send the third information to the second CHF. In this way, the second CHF may synchronize a status of the policy counter in the first CHF.

Optionally, the third information may be carried in a subscription information response message. The subscription information response message further includes subscription information of the UE. That the UDR sends the subscription information response message to the second CHF is equivalent to a case in which the third information is sent.

In a possible implementation, the first PCF may send the identifier of the first CHF to a first AMF. In addition, when the CHF serving the UE is changed from the first CHF to the second CHF, the first PCF may determine the identifier of the second CHF, and send the identifier of the second CHF to the first AMF.

In an example, both S1201 and S1203 in FIG. 12 are optional steps, and are shown by using dashed lines in FIG. 12.

It should be noted that, for possible implementations of the first PCF, the first CHF, and the first AMF in this embodiment of this application, refer to the content described in FIG. 5, and for a possible implementation of a third PCF, refer to the content described in FIG. 6.

In the embodiment shown in FIG. 12, when the CHF serving the UE is changed from the first CHF to the second CHF, the first CHF may send the third information to the UDR, and the second CHF may receive the third information from the UDR, so that the first CHF and the second CHF synchronize the status information of the policy counter. The second CHF may directly obtain the status information of the policy counter of the UE from the UDR, and the status information of the policy counter does not need to be re-determined, so that a processing amount of the second CHF is reduced. In addition, the serving PCF may update, in a timely manner based on the status information of the policy counter synchronized by the second CHF, a policy related to the UE, so that a case in which the second CHF cannot obtain the status information of the policy counter of the UE in a timely manner, and consequently, accuracy of the policy that is related to the UE and that is determined by the PCF is low is avoided.

FIG. 13 is a diagram of a structure of a communication apparatus according to an embodiment of this application. The communication apparatus 1300 may be configured to implement a function of the first network element in the embodiment in FIG. 5, FIG. 6, or FIG. 8, and therefore can further implement beneficial effects of the embodiment in FIG. 5, FIG. 6, or FIG. 8. As shown in FIG. 13, the communication apparatus 1300 includes a processing module 1301 and a transceiver module 1302.

For example, the processing module 1301 is configured to determine that a policy related to a terminal device is related to a spending limit of the terminal device, for example, configured to perform S501 in the embodiment shown in FIG. 5, S603 in the embodiment shown in FIG. 6, or step S802 in the embodiment shown in FIG. 8.

The transceiver module is configured to send first information to a second network element, for example, configured to perform S502 in the embodiment shown in FIG. 5, step S606 in the embodiment shown in FIG. 6, or step S803 in the embodiment shown in FIG. 8.

For more detailed descriptions of the processing module 1301 and the transceiver module 1302, refer to the content in the embodiment in FIG. 5, FIG. 6, or FIG. 8. Details are not listed herein.

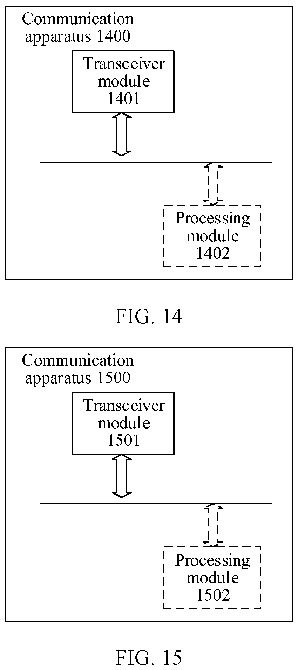

FIG. 14 is a diagram of a structure of a communication apparatus according to an embodiment of this application. The communication apparatus 1400 may be configured to implement a function of the second network element in the embodiment in FIG. 5, FIG. 6, or FIG. 8, and therefore can further implement beneficial effects of the embodiment in FIG. 5, FIG. 6, or FIG. 8. As shown in FIG. 14, the communication apparatus 1400 includes a transceiver module 1401. The communication apparatus 1400 further includes a processing module 1402. It should be noted that the processing module 1402 is optional, and is shown by using a dashed box in FIG. 14.

For example, the transceiver module 1401 is configured to receive first information from a first network element, for example, configured to perform S502 in the embodiment shown in FIG. 5, S606 in the embodiment shown in FIG. 6, or step S803 in the embodiment shown in FIG. 8.

The processing module 1402 is configured to control the transceiver module 1401 to receive the first information from the first network element.

For more detailed descriptions of the transceiver module 1401 and the processing module 1402, refer to the content in the embodiment in FIG. 5, FIG. 6, or FIG. 8. Details are not listed herein.

FIG. 15 is a diagram of a structure of a communication apparatus according to an embodiment of this application. The communication apparatus 1500 may be configured to implement a function of the fifth network element in any one of embodiments in FIG. 9 to FIG. 12, and therefore can further implement beneficial effects of any one of embodiments in FIG. 9 to FIG. 12. As shown in FIG. 15, the communication apparatus 1500 includes a transceiver module 1501. The communication apparatus 1500 further includes a processing module 1502. It should be noted that the processing module 1502 is optional, and is shown by using a dashed box in FIG. 15.

For example, the transceiver module 1501 is configured to send third information to a sixth network element, for example, configured to perform S901 in the embodiment shown in FIG. 9, S1002 in the embodiment shown in FIG. 10, S1102 in the embodiment shown in FIG. 11, or S1202 in the embodiment shown in FIG. 12.

The processing module 1502 is configured to control the transceiver module 1501 to send the third information to the sixth network element.

For more detailed descriptions of the transceiver module 1501 and the processing module 1502, refer to the content in any one of the foregoing embodiments in FIG. 9 to FIG. 12. Details are not listed herein.

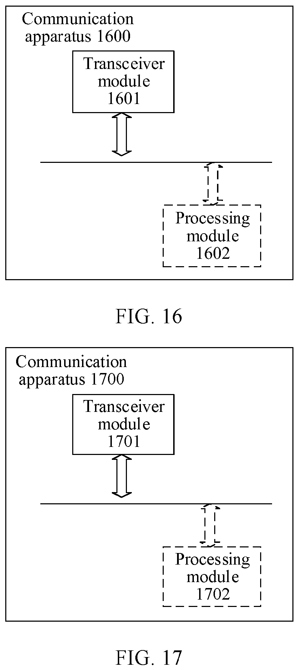

FIG. 16 is a diagram of a structure of a communication apparatus according to an embodiment of this application. The communication apparatus 1600 may be configured to implement a function of the seventh network element in any one of embodiments in FIG. 9 to FIG. 12, and therefore can further implement beneficial effects of any one of embodiments in FIG. 9 to FIG. 12.

As shown in FIG. 16, the communication apparatus 1600 includes a transceiver module 1601. The communication apparatus 1600 further includes a processing module 1602. It should be noted that the processing module 1602 is optional, and is shown by using a dashed box in FIG. 16.

For example, the transceiver module 1601 is configured to receive third information from a sixth network element, for example, configured to perform S901 in the embodiment shown in FIG. 9, S1002 in the embodiment shown in FIG. 10, 51102 in the embodiment shown in FIG. 11, or S1202 in the embodiment shown in FIG. 12.

The processing module 1602 is configured to control the transceiver module 1601 to receive the third information from the sixth network element.

For more detailed descriptions of the transceiver module 1601 and the processing module 1602, refer to the content in any one of the foregoing embodiments in FIG. 9 to FIG. 12. Details are not listed herein.

FIG. 17 is a diagram of a structure of a communication apparatus according to an embodiment of this application. The communication apparatus 1700 may be configured to implement a function of the charging network element in any one of embodiments in FIG. 6 and FIG. 8 to FIG. 12, and therefore can further implement beneficial effects of any one of embodiments in FIG. 6 and FIG. 8 to FIG. 12.

As shown in FIG. 17, the communication apparatus 1700 includes a transceiver module 1701. The communication apparatus 1700 further includes a processing module 1702. It should be noted that the processing module 1702 is optional, and is shown by using a dashed box in FIG. 17.

For example, the transceiver module 1701 is configured to send a spending limit report to a PCF, for example, configured to perform S605 and S617 in the embodiment shown in FIG. 6, configured to perform S806 in the embodiment shown in FIG. 8, and configured to perform S 1007 in the embodiment shown in FIG. 10 and S1107 in the embodiment shown in FIG. 11.

The processing module 1702 is configured to control the transceiver module 1701 to send the spending limit report to the PCF.

For more detailed descriptions of the transceiver module 1701 and the processing module 1702, refer to the content described in any one of the foregoing embodiments in FIG. 6 and FIG. 8 to FIG. 12. Details are not listed herein.

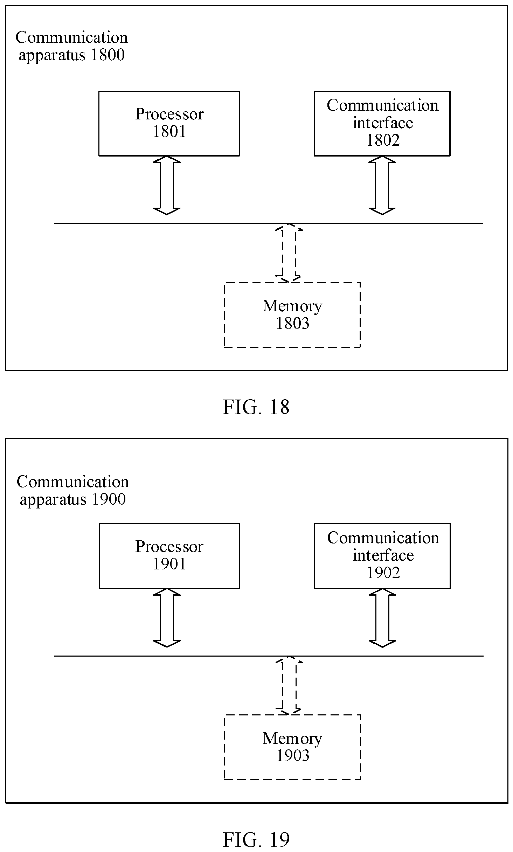

FIG. 18 is a diagram of a structure of a communication apparatus according to an embodiment of this application. As shown in FIG. 18, the communication apparatus 1800 includes a processor 1801 and a communication interface 1802. The processor 1801 and the communication interface 1802 are coupled to each other. It may be understood that the communication interface 1802 may be a transceiver or an input/output interface. Optionally, the communication apparatus 1800 may further include a memory 1803, configured to store instructions executed by the processor 1801, store input data required by the processor 1801 to run instructions, or store data generated after the processor 1801 runs instructions.

The communication apparatus 1800 may be configured to implement a function of the first network element shown in FIG. 5, FIG. 6, or FIG. 8. The processor 1801 is further configured to implement a function of the processing module 1301, and the communication interface 1802 is configured to implement a function of the transceiver module 1302.

Optionally, the processor 1801 and the memory 1803 may be coupled, that is, the memory 1803 is optional, and is shown by using a dashed box in FIG. 18.

FIG. 19 is a diagram of a structure of a communication apparatus according to an embodiment of this application. As shown in FIG. 19, the communication apparatus 1900 includes a processor 1901 and a communication interface 1902. The processor 1901 and the communication interface 1902 are coupled to each other. The communication apparatus 1900 may be configured to implement a function of the second network element shown in FIG. 5, FIG. 6, or FIG. 8. The processor 1901 is further configured to implement a function of the processing module 1402, and the communication interface 1902 is configured to implement a function of the transceiver module 1401.

Optionally, the processor 1901 and the memory 1903 may be coupled, that is, the memory 1903 is an optional module, and is shown by using a dashed box in FIG. 19.

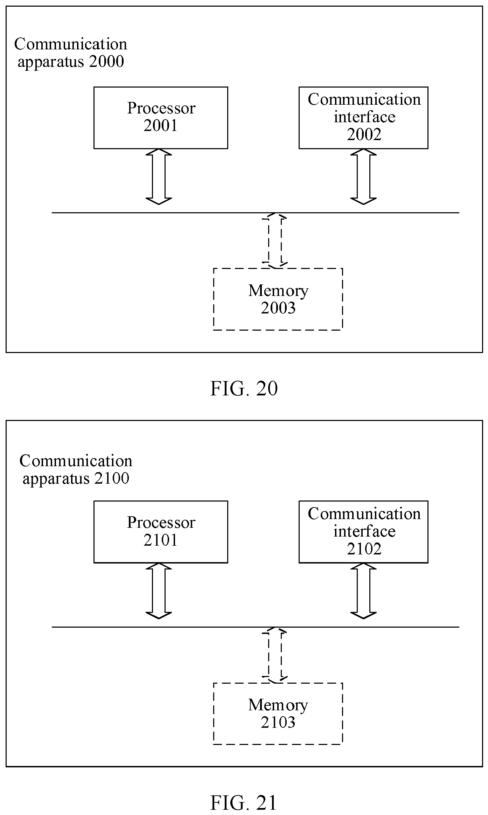

FIG. 20 is a diagram of a structure of a communication apparatus according to an embodiment of this application. As shown in FIG. 20, the communication apparatus 2000 includes a processor 2001 and a communication interface 2002. The processor 2001 and the communication interface 2002 are coupled to each other.

The communication apparatus 2000 may be used for a function of the fifth network element shown in any one of embodiments in FIG. 9 to FIG. 12. The processor 2001 is further configured to implement a function of the processing module 1502, and the communication interface 2002 is configured to implement a function of the transceiver module 1501.

Optionally, the processor 2001 and the memory 2003 may be coupled, that is, the memory 2003 is an optional module, and is shown by using a dashed box in FIG. 20.

FIG. 21 is a diagram of a structure of a communication apparatus according to an embodiment of this application. As shown in FIG. 21, the communication apparatus 2100 includes a processor 2101 and a communication interface 2102. The processor 2101 and the communication interface 2102 are coupled to each other.

The communication apparatus 2100 may be used for a function of the seventh network element shown in any one of embodiments in FIG. 9 to FIG. 12. The processor 2101 is further configured to implement a function of the processing module 1602, and the communication interface 2102 is configured to implement a function of the transceiver module 1601.

Optionally, the processor 2101 and the memory 2103 may be coupled, that is, the memory 2103 is an optional module, and is shown by using a dashed box in FIG. 21.

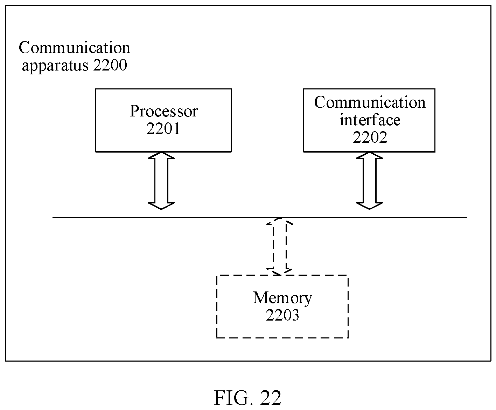

FIG. 22 is a diagram of a structure of a communication apparatus according to an embodiment of this application. As shown in FIG. 22, the communication apparatus 2200 includes a processor 2201 and a communication interface 2202. The processor 2201 and the communication interface 2202 are coupled to each other.

The communication apparatus 2200 may be used for a function of the charging network element shown in any one of embodiments in FIG. 6 and FIG. 8 to FIG. 12. The processor 2201 is further configured to implement a function of the processing module 1702, and the communication interface 2202 is configured to implement a function of the transceiver module 1701.

Optionally, the processor 2201 and the memory 2203 may be coupled, that is, the memory 2203 is an optional module, and is shown by using a dashed box in FIG. 22.

An embodiment of this application provides a communication system. The system includes the communication apparatus shown in FIG. 13 and the communication apparatus shown in FIG. 14. Optionally, the communication apparatus shown in FIG. 17 is further included.

An embodiment of this application provides a communication system. The system includes the communication apparatus shown in FIG. 15 and the communication apparatus shown in FIG. 16. Optionally, the communication apparatus shown in FIG. 17 is further included.

An embodiment of this application provides a chip system. The chip system includes a processor and an interface. The processor is configured to invoke instructions from the interface and run the instructions, and when the processor executes the instructions, the communication method according to any one of the foregoing embodiments is implemented.

An embodiment of this application provides a computer-readable storage medium. The computer-readable storage medium is configured to store a computer program or instructions, and when the computer program or the instructions are run, the communication method according to any one of the foregoing embodiments is implemented.

An embodiment of this application provides a computer program product including instructions, and when the instructions are run on a computer, the communication method according to any one of the foregoing embodiments is implemented.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a CD-ROM, or any other form of storage medium well-known in the art. For example, a storage medium is coupled to a processor, so that the processor can read information from the storage medium and write information into the storage medium. It is clear that the storage medium may be a component of the processor. The processor and the storage medium may be located in an ASIC. In addition, the ASIC may be located in a base station or a terminal. It is clear that the processor and the storage medium may exist in a base station or terminal as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
determining, by a first network element, that a policy related to a terminal device is related to a spending limit of the terminal device; and
sending, by the first network element, first information to a second network element, wherein the first information comprises an identifier of a first charging network element, the first charging network element is configured to provide a service for the terminal device, the first network element is a first policy control network element, and the second network element is a first mobility management network element, or the first network element is a second mobility management network element, and the second network element is a second policy control network element.

2. The method according to claim 1, wherein the determining, by a first network element, that a policy related to a terminal device is related to a spending limit of the terminal device comprises:
receiving, by the first network element, second information from a third network element, wherein the second information indicates that the policy is related to the spending limit of the terminal device, the first network element is the first policy control network element or the second mobility management network element, and the third network element is a unified data management network element or a unified data repository network element.

3. The method according to claim 1, wherein the determining, by a first network element, that a policy related to a terminal device is related to a spending limit of the terminal device comprises:
determining, by the first network element, that a policy related to a slice to which the terminal device subscribes is related to the spending limit of the terminal device.

4. The method according to any one of claims 1 to 3, wherein the method further comprises:
if a policy control network element serving the terminal device is changed from the first network element to a third policy control network element, sending, by the first network element, third information to a fourth network element, wherein the third information comprises one or more of a subscription correlation identifier of the terminal device, a subscription permanent identifier of the terminal device, the identifier of the first charging network element, or status information of a policy counter, the policy counter is configured to track charging of the terminal device, a status of the policy counter is a label associated with a value of the policy counter relative to the spending limit, the first network element is the first policy control network element, and the fourth network element is the second network element or a unified data repository network element.

5. A communication method, comprising:
receiving, by a second network element, first information from a first network element, wherein the first information comprises an identifier of a first charging network element, the first charging network element is configured to provide a service for a terminal device, the first network element is a first policy control network element, and the second network element is a first mobility management network element, or the first network element is a third mobility management network element, and the second network element is a third policy control network element.

6. The method according to claim 5, wherein the first network element is the first policy control network element, the second network element is the first mobility management network element, and the method further comprises:
determining, by the second network element, charging input information of the terminal device or a slice accessed by the terminal device, wherein the charging input information indicates information required for charging the terminal device; and
sending, by the second network element, the charging input information to the first charging network element.

7. The method according to claim 5 or 6, wherein the first network element is the first policy control network element, the second network element is the first mobility management network element, and the method further comprises:
receiving, by the second network element, third information from the first network element, wherein the third information comprises one or more of a subscription correlation identifier of the terminal device, a subscription permanent identifier of the terminal device, the identifier of the first charging network element, or status information of a policy counter, the policy counter is configured to track charging of the terminal device, and a status of the policy counter is a label associated with a value of the policy counter relative to a spending limit; and
sending, by the second network element, the third information to the third mobility management network element or a unified data repository network element, wherein the third mobility management network element is a mobility management network element to which a mobility management network element serving the terminal device is changed from the first mobility management network element.

8. The method according to claim 7, wherein the first network element is a second mobility management network element, the second network element is a second policy control network element, and the method further comprises:
receiving, by the second network element, the third information from the first charging network element, wherein the third information comprises the status of the policy counter, the policy counter is configured to track the charging of the terminal device, and the status of the policy counter is the label associated with the value of the policy counter relative to the spending limit; and/or
sending, by the second network element, the third information to the first network element or the unified data repository network element, wherein the third information comprises the status of the policy counter, the policy counter is configured to track the charging of the terminal device, and the status of the policy counter is the label associated with the value of the policy counter relative to the spending limit.

9. A communication method, comprising:
sending, by a fifth network element, third information to a sixth network element, wherein the third information comprises status information of a policy counter, the policy counter is configured to track charging of a terminal device, a status of the policy counter is a label associated with a value of the policy counter relative to a spending limit, the fifth network element is a first policy control network element or a first charging network element, and the sixth network element is a unified data repository network element or a first mobility management network element.

10. The method according to claim 9, wherein the fifth network element is the first policy control network element, the sixth network element is the unified data repository network element or the first mobility management network element, and the method further comprises:
determining, by the fifth network element, that a policy control network element serving the terminal device is changed from the first policy control network element to a third policy control network element.

11. The method according to claim 9 or 10, wherein the fifth network element is the first policy control network element, the sixth network element is the unified data repository network element or the first mobility management network element, and the method further comprises:
determining, by the fifth network element, that a policy related to the terminal device is related to the spending limit of the terminal device.

12. The method according to claim 11, wherein the determining, by the fifth network element, that a policy related to the terminal device is related to the spending limit of the terminal device comprises:
receiving, by the fifth network element, second information from a unified data management network element or the unified data repository network element, wherein the second information indicates that the policy related to the terminal device is related to the spending limit of the terminal device; or
determining, by the fifth network element, that a policy related to a slice to which the terminal device subscribes is related to the spending limit of the terminal device.

13. The method according to claim 9, wherein the fifth network element is the first charging network element, the sixth network element is the unified data repository network element, and the method further comprises:
determining, by the fifth network element, that a charging network element serving the terminal device is changed from the first charging network element to a second charging network element.

14. The method according to any one of claims 9 to 13, wherein the third information further comprises one or more of a subscription correlation identifier of the terminal device, a subscription permanent identifier of the terminal device, or an identifier of the first charging network element.

15. A communication method, comprising:
receiving, by a seventh network element, third information from a sixth network element, wherein the third information comprises status information of a policy counter, the policy counter is configured to track charging of a terminal device, a status of the policy counter is a label associated with a value of the policy counter relative to a spending limit, the sixth network element is a unified data repository network element and the seventh network element is a third policy control network element or a second charging network element, or the sixth network element is a first mobility management network element and the seventh network element is a third mobility management network element, the third mobility management network element is a mobility management network element to which a mobility management network element serving the terminal device is changed from the first mobility management network element, the third policy control network element is a policy control network element to which a policy control network element serving the terminal device is changed from a first policy control network element, and the second charging network element is a charging network element to which a charging network element serving the terminal device is changed from a first charging network element.

16. The method according to claim 15, wherein the third information further comprises one or more of a subscription correlation identifier of the terminal device, a subscription permanent identifier of the terminal device, or an identifier of the first charging network element.

17. The method according to claim 16, wherein the seventh network element is the third policy control network element, and the method further comprises:
sending, by the seventh network element, a first request to the first charging network element, wherein the first request comprises the subscription correlation identifier or the subscription permanent identifier corresponding to the terminal device; and
receiving a spending limit report from the first charging network element, wherein the spending limit report comprises an updated status of the policy counter.

18. A communication method, comprising:
sending, by a first charging network element, a first spending limit report to a first policy control network element, wherein the first spending limit report comprises status information of a policy counter, the policy counter is configured to track charging of a terminal device, a status of the policy counter is a label associated with a value of the policy counter relative to a spending limit, and the first policy control network element is a policy control network element serving the terminal device; and
if the first charging network element determines that the policy control network element serving the terminal device is changed from the first policy control network element to a third policy control network element, sending a second spending limit report of the terminal device to the third policy control network element, wherein the second spending limit report comprises updated status information of the policy counter.

19. The method according to claim 18, wherein the method further comprises:
receiving, by the first charging network element, a first request from the third policy control network element, wherein the first request is for requesting to obtain the second spending limit report, and the first request comprises a subscription correlation identifier or a subscription permanent identifier corresponding to the terminal device.

20. A communication apparatus, wherein the apparatus is used in a first network element, and the apparatus comprises:
a processing module, configured to determine that a policy related to a terminal device is related to a spending limit of the terminal device; and
a transceiver module, configured to send first information to a second network element, wherein the first information comprises an identifier of a first charging network element, the first charging network element is configured to provide a service for the terminal device, the first network element is a first policy control network element, and the second network element is a first mobility management network element, or the first network element is a second mobility management network element, and the second network element is a second policy control network element.

21. A communication apparatus, wherein the apparatus is used in a second network element, and the apparatus comprises:
a transceiver module, configured to receive first information from a first network element, wherein the first information comprises an identifier of a first charging network element, the first charging network element is configured to provide a service for a terminal device, the first network element is a first policy control network element, and the second network element is a first mobility management network element, or the first network element is a third mobility management network element, and the second network element is a third policy control network element.

22. A communication system, comprising the apparatus according to claim 20 and the apparatus according to claim 21.

23. A communication apparatus, comprising a processor and a memory, wherein the memory is configured to store one or more computer programs, the one or more computer programs comprise computer-executable instructions, and when the communication apparatus runs, the processor executes the one or more computer programs stored in the memory, to enable the communication apparatus to perform the method according to any one of claims 1 to 19.

24. A computer-readable storage medium, wherein the storage medium stores a computer program or instructions, and when the computer program or the instructions are executed by a communication apparatus, the method according to any one of claims 1 to 19 is implemented.

25. A communication method, comprising:
determining, by a first network element, that a policy related to a terminal device is related to a spending limit of the terminal device;
sending, by the first network element, first information to a second network element, wherein the first information comprises an identifier of a first charging network element, the first charging network element is configured to provide a service for the terminal device, the first network element is a first policy control network element, and the second network element is a first mobility management network element, or the first network element is a second mobility management network element, and the second network element is a second policy control network element; and
receiving, by the second network element, the first information.

26. The method according to claim 25, wherein the first network element is the first policy control network element, the second network element is the first mobility management network element, and the method further comprises:
determining, by the second network element, charging input information of the terminal device or a slice accessed by the terminal device, wherein the charging input information indicates information required for charging the terminal device; and
sending, by the second network element, the charging input information to the first charging network element.
